# EUROPEAN PATENT APPLICATION

(11) **EP 3 660 861 A1**
(43) Date of publication of application: **03.06.2020**
(21) Application number: 18837634.7
(22) Date of filing: 20.07.2018
(51) Int. Cl.: G21B 3/00

(54) **NUCLEAR FUSION REACTOR, THERMAL EQUIPMENT, EXTERNAL COMBUSTION ENGINE, ELECTRICITY GENERATING DEVICE, AND MOVING BODY**

(30) Priority: 23.07.2017 JP 2017142322; 01.02.2018 JP 2018016117
(71) Applicant: Ooyama Power Inc., Tokyo 161-0033 (JP)
(72) Inventor: OOYAMA, Kazuo, Tokyo 161-0033 (JP)
(74) Representative: Würmser, Julian
(86) International application number: PCT/JP2018/027296
(87) International publication number: WO 2019/021959

(57) **Abstract**

An object of the present invention is to achieve a simple and safe nuclear fusion reactor. The nuclear fusion reactor comprises: a vessel serving as a reactor body; a metallic heating element that contains heavy hydrogen contained in the vessel as a solute; a heavy hydrogen gas contained in the vessel, the heavy hydrogen gas being in an amount that allows 0.005% to 5% of heavy hydrogen to be contained as a solute in the metallic heating element based on the atomic ratio; and a mechanism for irradiating the metallic heating element with an ion beam. Such configuration causes, in the metallic crystal of the metallic heating element, a channeling phenomenon which guides ion beams to interstitial atom nuclei, and an intra-metal nuclear fusion probability increasing phenomenon which is explained based on the binary nucleus model. As a result, a "mild nuclear fusion" that does not emit gamma rays and neutron rays occurs, and the nuclear energy can be efficiently converted into heat due to the intra-metal nuclear fusion chain reaction.

## Description

### Technical Field

The present invention relates to a nuclear fusion reactor, and in particular, to a nuclear fusion reactor utilizing a channeling phenomenon and a nuclear fusion probability increasing phenomenon caused by the crystalline structure of metal, as well as relating to techniques using such nuclear fusion reactor.

### Background Art

Nuclear fusion reactors which have conventionally been proposed include a Tokamak-type reactor employing a plasma magnetic confinement method. A nuclear reactor utilizing nuclear fission uses water as a coolant and such nuclear reactor is used as a heat source for a steam turbine primarily in power generation. If a fission reactor of a higher temperature can be achieved in the future, the use of a combined cycle is expected; in the combined cycle, a less reactive gas, such as helium, is used as a coolant to operate a gas turbine in a closed circuit and the exhaust heat is used to operate a steam turbine. The steam turbine and the gas turbine in the closed circuit are external combustion engines, and a Stirling engine is used as one of such external combustion engines. Further, a thermoelectric module having a combination of a number of thermoelectric elements that directly generates power from a heat source is also known.

Regarding the development of a nuclear fusion reactor, a nuclear fusion reactor of a plasma magnetic confinement type needs much electric power for holding plasma as compared to the amount of heat it generates, and it is quite difficult to achieve a positive electric power balance. In addition, there are still many difficult problems such as a superconducting magnet for confining ultra-high temperature plasma and a material of an inner wall to be in contact with the plasma, and thus, we still cannot say that such fusion reactor will be practical use.

Regarding nuclear reactors utilizing nuclear fission, since the critical mass of uranium is fixed, the size reduction of nuclear reactors is limited. Moreover, since the output is controlled through insertion and removal of control rods, falling or malfunction of such control rods may cause a loss of control. Further, a loss of cooling power due to a stop in the supply of cooling water may also cause a loss of control. Such loss of control would possibly result in a nuclear core meltdown. In addition, since radioactive heavy atoms such as uranium are used as a fuel and large amounts of neutron rays and gamma rays having high penetrating powers are emitted as a result of nuclear reaction, a thick barrier wall is required. Further, a large amount of radioactive waste, whose disposal method has not yet been established, is generated.

In view of such problems, a technique utilizing so-called low-temperature nuclear fusion has been the subject of discussion as a technique for replacing the use of nuclear fusion or nuclear fission. Regarding low-temperature nuclear fusion, a phenomenon in which palladium containing heavy hydrogen (²H) as a solute generates heat has been reported and many patent applications in such area have been filed (such as, for example, patent document 1 below). Further, a nuclear transmutation phenomenon using palladium containing heavy hydrogen as a solute has also been reported and a nuclear transmutation apparatus disclosed in patent document 2 has been proposed as an example of an apparatus utilizing such phenomenon.

### Citation List

### Patent Document

Patent Document 1: JPH02-297093 A
Patent Document 2: JP2010-159994 A

### Summary

However, the above-mentioned phenomena related to low-temperature nuclear fusion are poor in terms of reproducibility and methods and apparatuses using low-temperature nuclear fusion as an energy source have not yet been brought into practical use. Under such circumstances, the inventor has conducted intensive studies in order to achieve a simple and safe nuclear fusion reactor and, as a result of such intensive studies, the inventors have found that: the above-mentioned phenomena result from a nuclear fusion chain reaction due to the nuclear fusion probability increasing phenomenon of the crystalline structure of metal; and lithium contained in an electrolyte (lithium hydroxide solution) used in the electrolysis experiment cited in patent document 1 contributing to the generation of heat, and the inventor has consequently achieved the present invention.

Specifically, when nuclear fusion occurs between ²H and ²H (hereinafter referred to as the "D-D nuclear fusion"), reactions represented by formulae (A) to (C) below usually proceed at the percentages (%) indicated after the colons:
(A) ²H + ²H → ³H (1 MeV) + ¹H (3 MeV): 50%
(B) ²H + ²H → ³He (0.8 MeV) + n (2.5 MeV): 50%
(C) ²H + ²H → ⁴He + γ (23.8 MeV): 10⁻⁵%

In formulae (A) to (C), ¹H represents light hydrogen, ³H represents tritium and ³He represents a helium nucleus with a mass number of three, and they are generated as high energy ion beams (charged particles). Further, n represents a neutron and γ represents a gamma ray. When normal D-D nuclear fusion occurs, a lot of neutrons having high penetrating power should be emitted. In fact, however, the above-mentioned electrolysis experiment using palladium only showed some examples in which a trace amount of neutrons was observed with respect to generated heat.

The greatest challenge in an assertion that these phenomena result from the nuclear fusion chain reaction is that the cross-sectional areas of reacted nuclei are very small, with even the largest one having a size of only about 0.1 b. Moreover, when nuclei travel within a substance as ion beams, due to the electric charge of the nuclei, the ion beams will be decelerated because of the stopping power from electrons and the nuclei of the substance and, as a result, the ion beams can travel only by a distance in the order of 10µm. For such reason, the possibility of a nuclear fusion chain reaction occurring has been excluded in the theoretical consideration stages.

On the other hand, a channeling phenomenon where the travelling direction of an ion beam is constrained so as to pass between crystalline planes or through sparse portions in a crystal orientation of a substance has been known as one of the properties of the crystalline structure. For example, JP H05-343344 A discloses a method of preventing the channeling phenomenon so as to prevent ions from being implanted too deeply during ion plantation in semiconductor manufacturing equipment. In this way, crystalline solids including metals have a nature of causing an ion beam to focus onto a portion where a nucleus of an interstitial atom exists, due to the channeling phenomenon.

Separately from the above, an intra-metal nuclear fusion probability increasing phenomenon has also been observed in which, when metals having no crystalline structure, including liquid metals, are irradiated with an ion beam, the nuclear fusion probability becomes greater than usual. This phenomenon can be explained using the binary nucleus model proposed by the inventor.

More specifically, since an ion beam nucleus and a nucleus of an interstitial atom both have positive charges, Coulomb repulsion acts therebetween. However, when these nuclei come closer to each other with a distance of about 140 fm, the nuclear force becomes superior to the Coulomb repulsion and both the nuclei attract each other, and they may start orbiting around each other. In a vacuum condition or a non-metallic substance, however, even if both the nuclei attract each other and start orbiting around each other, they will inevitably be separated from each other due to the conservation of energy. On the other hand, in metals, since a magnetic flux emitted as a result of the orbiting of the nucleus, being a charged particle, is absorbed by free electrons, both the nuclei cannot be separated from each other and a binary nucleus will be formed. Once the binary nucleus is formed, electromagnetic radiation will continue to be emitted due to the orbiting charged particles, and the kinetic energy of the orbiting will be gradually reduced. The distance between both the nuclei will further be reduced gradually, which consequently causes nuclear fusion.

As described above, since the size of the cross-sectional area of a reacted nucleus can be increased so as to approach the size of the nuclear force range based on the binary nucleus model, it is possible to solve the problem resulting from the overly small size of the cross-sectional area of the reacted nucleus, in conjunction with the channeling phenomenon. In addition, since most of the nuclear fusion energy is converted into heat during the course from the formation of the binary nucleus to the nuclear fusion, it is possible to achieve a "mild nuclear fusion" where no neutron or strong gamma rays are emitted.

Examples of the metals known to have properties of easily containing hydrogen as a solute include Li, Sc, Y, La, Ce, Ti, Zr, Hf, V, Nb, Ta and Pd. Since the equilibrium pressures of heavy hydrogen of these metals increase as the temperature increases, they discharge heavy hydrogen as a gas when the temperature increases, under the same pressure condition.

From among the above metals, it is known from a Pd-H phase diagram that Pd is separated into an α phase with a low hydrogen solute concentration and an α' phase with a high hydrogen solute concentration at a temperature equal to or lower than 298°C. Further, Pd is separated into the above-mentioned two phases in the heavy hydrogen gas under the atmospheric pressure at a temperature equal to or lower than 160°C and, in this state, the hydrogen concentration in the α phase is 5% or less based on the atomic ratio and the hydrogen concentration in the α' phase is 50% or more based on the atomic ratio.

Examples of metals which are difficult to contain hydrogen as a solute at room temperatures, but have equilibrium pressures of heavy hydrogen that decrease as the temperature increases and thus become capable of containing heavy hydrogen as a solute to a certain extent at a high temperature include Mg, Al, Cr, Mo, W, Fe, Ru, Co, Rh, Ni, Pt, Cu and Au.

In general, examples of ion beam irradiation methods include the use of an ion accelerator or the use of a radioactive isotope that emits a particle beam. Examples of the particle beam include particle beams of α particles, electrons, neutrons and protons, among which, positively-charged particle beams, excluding protons, are made up of light nuclei, such as hydrogen and helium, which have obtained high energy. For example, a proton beam, a deuteron beam and an α beam are ion beams made up of nuclei of hydrogen, heavy hydrogen and helium, respectively (hereinafter referred to as ¹H, ²H and ⁴He, respectively).

An example of a nuclear fusion reactor according to the present disclosure comprises: a vessel serving as a reactor body; a metallic heating element containing heavy hydrogen contained in the vessel as a solute; a heavy hydrogen gas contained in the vessel in an amount that allows 0.005% to 5% heavy hydrogen to be contained as a solute in the metallic heating element based on the atomic ratio; and a mechanism for irradiating the metal heating element with an ion beam. Metals of the metallic heating element do not include amorphous or liquid metal that does not have a crystalline structure. In the nuclear fusion reactor having such configuration, the metallic heating element containing the heavy hydrogen as a solute is activated by being irradiated with the ion beam in a certain way so as to generate heat.

The mechanism for ion beam irradiation is not particularly limited, representative examples of which include an ion accelerator and other examples thereof include a radioactive isotope that emits a particle beam and ²¹⁰Po that emits a strong α ion beam by alpha decay. In cases where a very high dose is not required, forming a thin plate of an alloy containing relatively inexpensive depleted uranium or a thin plate of metal such as americium (²⁴¹Am) and placing the thin plate so as to be adjacent to the metallic heating element is a reasonable way to proceed due to its high level of safety and reusability. Other examples of the mechanism for ion beam irradiation include uranium glass and thoriated tungsten electrode for welding purposes, they are generally available on the market, although they produce only a trace dose of α beams.

An ion beam inlet with part of the metallic heating element exposed to a surface of the vessel also falls under the "mechanism for irradiating the metallic heating element with an ion beam." Specifically, by irradiating the ion beam inlet with the ion beam, the metallic heating element can be irradiated with the ion beam. In such case, it is preferable for the ion beam inlet to be provided with an open/close cover. Such cover can prevent the heavy hydrogen from being diffused as a gas from the ion beam inlet into the atmosphere. Further, providing the ion beam inlet with a heavy hydrogen-impermeable layer (heavy hydrogen diffusion prevention layer) having a thickness that allows the ion beam to be transmitted therethrough is also preferable, since such configuration also provides a similar effect. Examples of materials constituting the heavy hydrogen-impermeable layer include metals such as Fe, Cu, W, Cr, Mo and Al, and inorganic materials such as crystalline clay.

In the above-mentioned configuration, the metallic heating element may contain 0.0005% to 1% lithium as a solute in a portion receiving a supply of the ion beam or in the entire metallic heating element, based on the atomic ratio.

In the above-mentioned configuration, the portion containing lithium as a solute in the metallic heating element may face the heavy hydrogen gas and the heavy hydrogen gas may contain an ion beam emitting substance. Examples of an ion beam emitting gas include a low reactive gas that emits an α beam, specific examples of which include a radon gas. It should be noted that, since the radon gas is included in the atmosphere or in new buildings, for example, preparing a large reactor would be encompassed in the configuration of "the heavy hydrogen gas containing an ion beam emitting substance," even without intentionally introducing the radon gas into the heavy hydrogen gas.

In the above-mentioned configuration, the nuclear fusion reactor may comprise a mounting table on which the ion beam emitting substance is mounted, so that, when the metallic heating element is mounted on the table, the ion beam emitting substance is located so as to be adjacent to the portion containing lithium as a solute.

In the above-mentioned configuration, the lithium may primarily contain ⁶Li which is an isotope of lithium (the lithium may contain ⁶Li as a primary component).

In the above-mentioned configuration, the nuclear fusion reactor may comprise a metal that is located adjacent to the metallic heating element, the metal containing (for example, in an embedded manner) a substance to be subjected to nuclear transmutation.

In the above-mentioned configuration, the nuclear fusion reactor may comprise a device for regulating an amount of heavy hydrogen contained as a solute in the metallic heating element. The device for regulating the amount of heavy hydrogen contained as a solute may be, for example, a pressure regulating device for the heavy hydrogen gas or a mass flow controller.

In the above-mentioned configuration, the metallic heating element may be a metal whose equilibrium pressure of heavy hydrogen increases as the temperature increases, and the device for regulating the amount of heavy hydrogen contained as a solute may regulate the amount of heavy hydrogen contained as a solute so as to be smaller than the amount of heavy hydrogen that allows the metallic heating element to most actively cause nuclear fusion.

Alternatively, the metallic heating element may be a metal whose equilibrium pressure of heavy hydrogen decreases as the temperature increases, and the device for regulating the amount of heavy hydrogen contained as a solute may regulate the amount of heavy hydrogen contained as a solute so as to be greater than the amount of heavy hydrogen that allows the metallic heating element to most actively cause nuclear fusion.

In the above-mentioned configuration, the metallic heating element may have a continuous vent hole formed thereinside. It is preferable for the continuous vent hole to be distributed inside the metallic heating element in a substantially uniform manner and an end of the continuous vent hole has to open to the surface of the metallic heating element.

In the above-mentioned configuration, the heavy hydrogen gas may contain a helium gas as a coolant for the metallic heating element.

In the above-mentioned configuration, the nuclear fusion reactor may comprise a device for removing helium from the heavy hydrogen gas.

Another example of a nuclear fusion reactor according to the present disclosure comprises a plurality of nuclear fusion reactors having the above-mentioned configurations, the plurality of nuclear fusion reactors being arranged in series along a flowing direction of a single cooling medium.

An example of a thermal device according to the present disclosure uses the nuclear fusion reactor having the above-mentioned configurations as a heat source. In such case, the thermal device may have a space provided so as to allow a heating target to be contained or distributed therein and allow heat generated in the nuclear fusion reactor to be transferred to the heating target.

An example of an external combustion engine according to the present disclosure uses the nuclear fusion reactor having the above-mentioned configurations as a heat source. In such case, the external combustion engine may have a high-temperature part containing a working medium, so that the working medium in the high-temperature part is heated by the heat generated in the nuclear fusion reactor to thereby generate motive power.

An example of a power generating apparatus according to the present disclosure uses the nuclear fusion reactor having the above-mentioned configurations as a heat source. In such case, the power generating apparatus may comprise a thermoelectric conversion unit that converts heat generated in the nuclear fusion reactor into electric power, so that the heat generated in the nuclear fusion reactor can be used to generate electric power. Further, the power generating apparatus may comprise an external combustion engine that converts heat generated in the nuclear fusion reactor into motive power and may also comprise a generator that converts the motive power from the external combustion engine into electric power, so that the heat generated in the nuclear fusion reactor is used to generate the electric power.

An example of a moving object according to the present disclosure uses the external combustion engine as a motive power source, the external combustion engine using the nuclear fusion reactor having the above-mentioned configurations as a heat source.

Another example of a moving object according to the present disclosure uses the power generating apparatus as an electric power source, the power generating apparatus using the nuclear fusion reactor having the above-mentioned configurations as a heat source.

### Advantageous Effects of Invention

Operations and advantageous effects of a nuclear fusion reactor according to the present invention will be described below using an example where a metallic heating element is irradiated with an α ion beam.

Since the metallic heating element has a crystalline structure, the channeling phenomenon occurs, wherein the α ion beam is deflected so as to travel between crystalline planes and is accurately guided to the nuclei of interstitial heavy hydrogen atoms which are contained as a solute in the metallic heating element. Since the energy of the α ion beam is high, the α ion beam approaches the nuclei of the interstitial heavy hydrogen atoms which are contained as a solute beyond the Coulomb barrier of such nuclei, and attracts and guides the nuclei with nuclear force so as to turn into an ion beam within the metallic heating element. Since the channeling phenomenon allows the resulting ²H ion beam to be similarly guided to the nuclei of the interstitial heavy hydrogen atoms, a binary nucleus with two ²H nuclei orbiting around each other like a binary star is formed, as long as the amount of energy is appropriate. If the energy of the resulting ²H ion beam is too small, the ²H ion beam cannot go beyond the Coulomb barrier of the heavy hydrogen nuclei. On the other hand, if the energy of the resulting ²H ion beam is too high, it cannot be captured by the nuclear force of ²H, and it is highly likely that the binary nucleus cannot be formed.

Since the binary nucleus formed as described above has the same momentum as the momentum that the ²H ion beam had before forming such binary nucleus, the binary nucleus becomes an ion beam passing through the same channeling path. On the other hand, since positively-charged ²H nuclei rotate in the same direction in the binary nucleus, the binary nucleus emit a magnetic flux. Thus, when the binary nucleus travels through a metal, an eddy current is generated and a strong stopping power is applied to the binary nucleus. As a result, if the ²H concentration in the metallic heating element is small, the binary nucleus will stop without colliding against the ²H nuclei and will remain as-is and capture the surrounding electrons and remain within an interstitial space of the crystalline structure of the metallic heating element as pseudo atoms. Since the two heavy hydrogen nuclei, being charged particles constituting the binary nucleus, are continuously accelerated by each other with their nuclear force, they will gradually lose their energy due to braking radiation and gradually approach each other, and the two heavy hydrogen nuclei will finally collide with each other to cause nuclear fusion.

In the nuclear fusion at this moment, the heavy hydrogen nuclei have already lost part of their energy due to the braking radiation, etc., the reactions represented by formula (A) and formula (B) above do not occur, and the reaction represented by formula (C) above preferentially occurs, which results in the production of ⁴He. In this case, since most of the remaining energy has been converted into a kinetic energy for orbiting and this kinetic energy is emitted as phonon when the nuclear fusion occurs, the energy of the gamma rays emitted as a result of the reaction of formula (C) is small. As described above, the metallic heating element is heated in the course from the formation of the binary nucleus to the nuclear fusion due to the eddy current, braking radiation and phonon. In other words, with the reaction between heavy hydrogen nuclei undergoing the formation of a binary nucleus, it is possible to achieve the "mild nuclear fusion" represented by formula (1) below, which enables efficient production of thermal energy without emitting neutron rays having high penetrating power or gamma rays having high energy.

²H + ²H → ⁴He... (1)

The ⁴He resulting from the above nuclear fusion is then accumulated as-is as an interstitial atom in the crystalline structure of the metallic heating element and, when the ²H ion beam is guided to such ⁴He nucleus, a binary nucleus of heavy hydrogen nucleus and helium nucleus is formed by the same mechanism as that of the formation of the above-described binary nucleus, which causes the "mild nuclear fusion" represented by formula (2) below and produces ⁶Li.

²H + ⁴He → ⁶Li... (2)

Furthermore, the ⁶Li resulting from the above nuclear fusion is accumulated as-is as an interstitial atom in the crystalline structure of the metallic heating element and, when the ²H ion beam is guided to the ⁶Li nucleus, a binary nucleus of heavy hydrogen nucleus and lithium nucleus is formed by the same mechanism as that of the formation of the above-described binary nucleus. When the resulting binary nucleus causes a nuclear fusion, the binary nucleus is separated into two α nuclei due to the reaction represented by formula (3) below concurrently with the nuclear fusion, without causing the formation of an unstable ⁸Be nucleus. At this time, the orbiting kinetic energy that the binary nucleus had turns into the kinetic energy of the resulting α ion beams.

²H + ⁶Li → ⁴He (6.2 MeV) + ⁴He (6.2 MeV)... (3)

In formula (3) above, the calculation based on the mass change leads to the energy of each α ion beam of 11.2 MeV; however, since part of the energy of the binary nucleus has been lost due to the braking radiation until the nuclear fusion occurs, the energy of each α ion beam is about 6.2 MeV, which is smaller than the calculated value.

Since the newly produced α ion beam is again guided to the nucleus of an interstitial atom by the channeling phenomenon and a lot of ion beams are generated, a chain reaction from formulae (1) to (3) occurs. As described above, in the nuclear fusion chain reaction within a metallic crystal represented by formulae (1) to (3), it is possible to efficiently extract nuclear fusion energy as heat generated from the metallic heating element without generating strong gamma rays or neutron rays.

Further, since the nuclear fusion reactor according to the present invention utilizes the channeling phenomenon as described above, even if temperature control is disabled due to a certain failure and the temperature excessively increases, the crystal lattice will be broken before the metal in the metallic heating element melts, whereby nuclear fusion based on the channeling phenomenon will no longer occur. Accordingly, the meltdown of the metallic heating element cannot occur, in theory, and the metal liquefied with its crystalline structure lost cannot be further heated. In addition, since the irradiated ion beam and the ion beam generated inside the metallic heating element are held by the crystalline structure of the metallic heating element, electric power or a device for holding the magnetic field is no longer necessary. In addition, since no strong gamma rays or neutron rays are generated, having only a simple barrier wall will suffice and no radioactive waste is generated.

In the nuclear fusion reactor according to the present invention, it is preferable for the metallic heating element to be prone to cause the channeling phenomenon in order to cause the chain reaction represented by formulae (1) to (3) to continuously proceed. From such viewpoint, a metallic heating element having a higher atom density and a higher specific gravity is more advantageous and, in the same kind of metal, those having fewer lattice defects are more advantageous. Examples of preferable metals for the metallic heating element may include metals having an FCC crystalline structure or a BCC crystalline structure in which an interstitial atom exists in the channeling path through which the ion beam affected by the channeling phenomenon travels. The channeling phenomenon in the metallic heating element occurs more easily with the smaller number of interstitial heavy hydrogen atoms; however, if the number of such atoms is too small, the ion beam is prone to lose its kinetic energy before reaching the nuclei of the interstitial atoms and tends to fail to cause nuclear fusion. Accordingly, in order for the chain reaction represented by formulae (1) to (3) above to continuously occur, it is necessary to appropriately regulate the amount of heavy hydrogen contained as a solute in the metallic heating element.

In order for the chain reaction to occur due to the reactions represented by formulae (1) to (3) above, the two ⁴He ion beams of 6.2 MeV generated by the reaction represented by formula (3) have to cause the ²H nuclei, which the two ⁴He ion beams encounter during the travel within the metallic heating element (e.g., Pd), to turn into ion beams, and the resulting ²H ion beams further have to encounter ²H, ⁴He and ⁶Li nuclei while holding sufficient energy to form the binary nuclei during the travel within the metallic heating element. In view of the above, although the energy required to cause a ²H nucleus to turn into an ion beam is unknown, the distance by which the ⁴He ion beam of 6.2 MeV can travel in the metallic heating element (e.g., Pd) is about 17 µm, and one ²H nucleus has to be present at about 5.5 µm from the entrance of one channeling path.

Since the distance between the O sites in the Pd crystalline lattice that the heavy hydrogen can enter is 2.75 Å, 0.005% or more ²H has to exist in the metallic heating element based on the atomic ratio. If the heavy hydrogen concentration exceeds 5% based on the atomic ratio, Pd is separated into two phases in the heavy hydrogen gas under the atmospheric pressure at a temperature of 160°C or lower, which causes the crystal to be discontinuous and further causes the crystalline structure to be distorted due to the internal stress, so that the channeling phenomenon tends not to occur. Accordingly, in the nuclear fusion reactor according to the present invention, the heavy hydrogen concentration in the metallic heating element needs to be in the range from 0.005% to 5% based on the atomic ratio.

If the metallic heating element containing the heavy hydrogen as a solute at the above-mentioned concentration continuously receives the supply of the ion beam, ⁴He and ⁶Li will be accumulated therein and the portion receiving the ion beam in the metallic heating element starts generating heat and then the entire metallic heating element gradually generates heat.

Further, causing 0.005% to 1% of lithium to be contained as a solute in the portion receiving the ion beam irradiation in the metallic heating element, based on the atomic ratio, would be preferable as it can allow the chain reaction to rapidly occur with only a simple ion beam supply device.

If the ⁴He ion beams having an energy of 6.2 MeV generated by the reaction of formula (3) above generate the ²H ion beams and one heavy hydrogen nucleus in such ²H beams can form a binary nucleus with a lithium nucleus with a probability of 50% or more, it is possible to cause the chain reaction. Thus, it is preferable for the lithium to be contained in the metallic heating element at the concentration of 0.0025% or more, which is half the minimum necessary concentration of the heavy hydrogen (i.e., 0.005% as described above). However, considering that the lithium is not essential for initiating the chain reaction, causing at least 0.0005% lithium to be contained as a solute in the portion receiving the ion beam irradiation in the metallic heating element can advantageously promote the initiation of the chain reaction. Further, considering that the electric charge of a lithium nucleus is three times greater than that of the ²H nucleus and that lithium as contained as a solute in the metallic heating element causes greater distortion in the crystal lattice, lithium has around a five times greater impact of impeding the channeling phenomenon than heavy hydrogen. Thus, in order for the chain reaction to occur, the concentration of lithium is preferably about 1/5 of the upper limit of the heavy hydrogen concentration (i.e., 5% described above). In view of the above, the lithium concentration is preferably in the range of from 0.0005% to 1% in the atomic ratio.

In addition, there are two isotopes of lithium in nature, ⁶Li and ⁷Li, in which 7.5% of the abundance ratio consists of ⁶Li and the remaining part consists of ⁷Li. When a portion containing natural Li of such abundance ratio as a solute is irradiated with ion beams and ²H ion beams are generated inside the metallic heating element, the reaction of formula (3) above occurs in ⁶Li and the reaction represented by formula (4) below occurs in ⁷Li. The ⁵He generated by the reaction of formula (4) decays rapidly, emits neutrons and disintegrates into ⁴He, as in the reaction represented by formula (5) below.

²H + ⁷Li → ⁴He (7.9 MeV or less) + ⁵He (6.3 MeV or less)... (4)

⁵He → ⁴He (0.18 MeV) + n (0.71 MeV)... (5)

Since ⁵He decays in very short time, the ⁴He generated as a result of such decay will take over, almost as-is, the energy of 6.3 MeV or less which ⁵He has obtained from the reaction of formula (4). As described above, although the neutrons are emitted in the reaction of ⁷Li, two α ion beams are generated in the same way as in the reaction of ⁶Li and therefore ⁷Li also contributes to the continuation of the chain reaction and its degree of contribution is almost equal to that of ⁶Li.

The α ion beams resulting from the reaction involving Li approach the heavy hydrogen nucleus beyond the Coulomb barrier and attract and guide the ²H nucleus with the nucleus force so as to turn into ion beams within the metallic heating element. The resulting ²H ion beams cause the reaction of formula (1) and the α ion beams stop due to the loss of energy and accumulates as an interstitial atom of ⁴He inside the metallic heating element. As a result of the accumulation of ⁴He, the reaction of formula (2) above is also activated and ⁶Li is generated.

In the nuclear fusion reactor according to the present invention having the configuration in which lithium is contained as a solute in the metallic heating element, by irradiating the portion containing Li as a solute in the metallic heating element with an ion beam, the chain reaction from formulae (1) to (3) above is rapidly initiated. Then, ⁴He and ⁶Li are gradually accumulated from the portion which receives the ion beam irradiation, and the entire metallic heating element starts generating heat.

Methods of causing lithium to be contained as a solute in the metallic heating element may include a method of implanting lithium in the metallic heating element as ion beams and a method of electrolyzing a solution containing lithium ions and impregnating a metal on the cathode side with lithium. Other methods may include causing lithium to adhere onto the metallic heating element by, for example, rubbing solid lithium against the surface of the metallic heating element in a vacuum or causing liquid lithium to flow, and then causing lithium to diffuse inside the metallic heating element by heat treatment.

In the nuclear fusion reactor according to the present invention, the chain reaction of formulae (1) to (3) above may be initiated by placing the portion containing lithium as a solute in the metallic heating element so as to face the heavy hydrogen gas and configuring the heavy hydrogen gas so as to contain an ion beam emitting substance.

Examples of the "the ion beam emitting substance" include a radon gas contained in the atmosphere or in new buildings, and the larger the reactor is, the more likely that radon gas is contained in the heavy hydrogen gas. Cosmic rays may sometimes contain particles having ultrahigh energy, such as proton beams and, when such particles enter the earth's atmosphere, they may collide with atoms in the atmosphere and generate high energy particle beams. In such case, since the particle beams can be supplied to the portion containing lithium as a solute in the metallic heating element without the need for particularly making the heavy hydrogen gas contain the radon gas, etc., the metallic heating element spontaneously starts generating heat as long as the conditions such as heavy hydrogen concentration in the metallic heating element are satisfied.

Further, since the metallic heating element has a nuclear transmutation function as will be described later, the generated ⁶Li is converted into an even heavier nucleus or a metallic atom introduced as an interstitial atom undergoes nuclear transmutation, which results in the accumulation of impurity atoms and, therefore, the metallic heating element will eventually have to be replaced with a new one.

In view of the above, it is preferable for the nuclear fusion reactor according to the present invention to comprise a mounting table which is configured such that, when the metallic heating element is placed thereon, the ion beam emitting substance can be located at a position adjacent to the portion containing lithium as a solute in the metallic heating element, because such configuration can facilitate the replacement of the metallic heating element and allow even a plurality of metallic heating elements to be activated at the same time.

As described above, it is possible to start the nuclear fusion reactor even by using lithium existing in nature as the lithium to be contained as a solute in a portion of the metallic heating element. However, the lithium in nature primarily consists of ⁷Li and therefore needs to be handled with great care as it will emit, even though in trace amounts, neutron rays having a high penetrating power as represented in formula (5) above. Therefore, if the lithium used in the nuclear fusion reactor according to the present invention is lithium mainly containing ⁶Li, the generation of neutron rays can be extremely reduced and the handling can be easier. In such case, the nuclear fusion reactor according to the present invention can be advantageously used as a small reactor for which it would be difficult to secure a thick barrier wall.

In the nuclear fusion reactor according to the present invention, by providing a metal (hereinafter referred to as the "base metal") that contains (for example, in an embedded manner) a substance to be subjected to nuclear transmutation so as to be adjacent to the metallic heating element, it is possible to provide a nuclear transmutation function. Specifically, by providing the base metal so as to be adjacent to the metallic heating element, the helium nucleus in the α ion beam generated by the above-mentioned chain reaction and the nucleus of the substance to be subjected to nuclear transmutation will undergo nuclear fusion and cause nuclear transmutation. If the substance to be subjected to nuclear transmutation is contained (embedded) in the metallic heating element itself, there is a risk of suppressing the chain reaction and it is therefore advantageous to place the base metal so as to be adjacent to the metallic heating element.

The metal serving as the base metal may be the same metal as or a different metal from the metallic heating element. Since the substance to be subjected to nuclear transmutation has to be located at a distance by which the α ion beam can travel with an energy loss of only about 2 MeV (a distance of several micrometers from the portion where the chain reaction is generated), it is preferable for the thickness of the base metal to be smaller than such distance. Further, if the base metal contains the substance to be subjected to nuclear transmutation in the "embedded" manner, the substance to be subjected to nuclear transmutation can advantageously be diffused in the atomic level as interstitial atoms of the base metal, so that the substance to be subjected to nuclear transmutation can be easily irradiated with the ion beams. If the substance to be subjected to nuclear transmutation has the characteristics of forming a compound with or accumulating on the base metal, the substance to be subjected to nuclear transmutation can be implanted into the base metal as ion beams.

Examples of the substance to be subjected to nuclear transmutation may include ⁹⁹Tc and ⁹³Zr, which are nuclides that emit radiation for a long period of time and whose melting points are higher than the temperature inside the nuclear fusion reactor. Such nuclides undergo nuclear transmutation and turn into stable nuclides such as ¹⁰³Rh and ⁹⁷Mo by the reactions represented by formulae (6) and (7) below.

⁴₂He + ⁹⁹₄₃Tc → ¹⁰³₄₅Rh... (6)

⁴₂He + ⁹³₄₀Zr → ⁹⁷₄₂Mo... (7)

By configuring the nuclear fusion reactor according to the present invention so as to comprise a device for regulating the amount of heavy hydrogen contained as a solute in the metallic heating element, the amount of heavy hydrogen contained as a solute in the metallic heating element can be controlled and it is therefore possible to achieve a nuclear fusion reactor capable of performing output control. In such case, a metal having characteristics in which the equilibrium pressure of heavy hydrogen changes depending on the temperature can be used as the metallic heating element. In such configuration, the output can be controlled by reducing the amount of heavy hydrogen contained as a solute for the properties in which the reaction is inhibited as the number of interstitial ²H atoms decreases, whereas the output can be controlled by increasing the amount of heavy hydrogen contained as a solute for the properties in which the reaction is inhibited as the number of interstitial ²H atoms increases.

In the configuration in which a small amount of lithium is contained as a solute in the portion receiving the ion beam in the metallic heating element or in the entire metallic heating element, since ⁴He has not yet been accumulated at the initiation point, the number of interstitial atoms is not large and the reaction therefore tends to be active. Thus, by regulating the amount of heavy hydrogen contained as a solute in the metallic heating element at the initiation point so as to inhibit the reaction while regulating the amount of heavy hydrogen contained as a solute in the metallic heating element as the amount of accumulated ⁴He increases so as to activate the reaction, it is possible to obtain a stable output.

More specifically, by using a metal whose equilibrium pressure of heavy hydrogen increases as the temperature increases as the metallic heating element, and by using the device for regulating the amount of heavy hydrogen contained as a solute to regulate the amount of heavy hydrogen so as to be smaller than the amount of heavy hydrogen that allows the metallic heating element to most actively cause the nuclear fusion, the reaction of discharging heavy hydrogen is inhibited as the temperature increases, which means that a self-regulating function is provided. Further, if the device for regulating the amount of heavy hydrogen contained as a solute is, for example, a pressure regulating device for heavy hydrogen gas, the reaction is more inhibited at a higher-temperature portion in the metallic heating element under the same pressure, and it is therefore possible to advantageously make the temperature of the metallic heating element uniform.

On the other hand, by using a metal whose equilibrium pressure of heavy hydrogen decreases as the temperature increases as the metallic heating element, and by using the device for regulating the amount of heavy hydrogen contained as a solute to regulate the amount of heavy hydrogen so as to be greater than the amount of heavy hydrogen that allows the metallic heating element to most actively cause the nuclear fusion, the metal absorbs the heavy hydrogen as the temperature increases, the channeling phenomenon becomes difficult to occur and the reaction is thus inhibited, which means that a self-regulating function is provided. As a result, the temperature of the metallic heating element can be appropriately made uniform, similarly to the above-mentioned configuration.

In the nuclear fusion reactor according to the present invention, it is preferable for the metallic heating element to have a continuous vent hole formed thereinside, since such continuous vent hole increases the surface area of the metallic heating element and promotes discharge of ⁴He gas by diffusion. The above-mentioned nuclear fusion chain reaction generates ⁴He, and excess ⁴He which is generated as the reaction proceeds could impede the channeling phenomenon as a lattice defect, which could consequently impede the nuclear fusion chain reaction. Further, the diffusion rate of ⁴He is slower than ²H and ⁴He thus tends to remain within the metallic heating element. Accordingly, by forming the continuous vent hole inside the metallic heating element, the chain reaction inside the metallic heating element can be activated and the amount of heat generation can be kept high.

In the nuclear fusion reactor according to the present invention, it is preferable for the heavy hydrogen gas in the vessel to contain a helium gas and for the helium gas to be used as a coolant for the metallic heating element, since such configuration can advantageously achieve a mixed gas reactor in which the metallic heating element is cooled upon receiving the supply of the heavy hydrogen gas. In such case, since the heavy hydrogen gas is consumed in the metallic heating element and the generated helium gas is discharged as described above, the helium gas is mixed in the heavy hydrogen gas inside the vessel and, as a result, the partial pressure of the heavy hydrogen gas is reduced.

It is preferable for the nuclear fusion reactor according to the present invention to comprise a device for removing helium from the heavy hydrogen gas in the vessel, since such configuration can remove excess helium gas from the heavy hydrogen gas and therefore achieve a nuclear fusion reactor capable of keeping the amount of heat generation high. It is also advantageous to employ such configuration in the above-mentioned mixed gas reactor.

It is preferable for the nuclear fusion reactor according to the present invention to comprise a plurality of nuclear fusion reactors each having the device for regulating the pressure of heavy hydrogen, the nuclear fusion reactors being arranged in series along a flowing direction of a single cooling medium (coolant), since such configuration can allow the amount of heavy hydrogen contained as a solute in each of the nuclear fusion reactors to be independently controlled. In such case, since the temperature of the cooling medium gradually increases as it undergoes heat change with the nuclear fusion reactors in sequence, by regulating the temperatures of the nuclear fusion reactors so as to become higher in a stepwise manner, the loads can be made uniform, the output from the nuclear fusion reactors as a whole can be enhanced, and the life of the nuclear fusion reactors can be prolonged.

Since a thermal device using the nuclear fusion reactor according to the present invention as a heat source produces an extremely small amount of radiation having high penetrating power, such as neutrons and gamma rays, such thermal device only requires a simple shielding, is easily controllable and free from the risk of meltdown, and can also reduce radiation debris. Thus, such nuclear fusion reactor can be easily downsized and simplified, unlike conventional nuclear reactors, and such nuclear fusion reactors can be used as a heat source for various thermal devices, such as a heat source for an industrial plant, a heat source for power generation, a heat source for motive power and a heat source for the home.

In the external combustion engine using the nuclear fusion reactor according to the present invention as a heat source, a small-sized reactor body can be employed and such nuclear fusion reactor can be used as a heat source for a small external combustion engine such as a Stirling engine. Further, by using a highly heat-resistant material, the nuclear fusion reactor can be made into a high-temperature heat source, which can be utilized as an external combustion engine having a higher heat efficiency than conventional nuclear reactors which are primarily of a boiling-water-type, such as a steam turbine using a once-through boiler with no steam separator, a combined cycle employing a helium gas as a cooling medium (coolant), etc.

In the power generating apparatus using the nuclear fusion reactor according to the present invention as a heat source, since even a small metallic heating element of, for example, a coin size, can generate heat, it can be combined with a thermoelectric module so as to be utilized as a super-small power generating apparatus.

Since the nuclear fusion reactor according to the present invention can be downsized and it can easily accommodate load variation as described above, it is suitable as a heat source for motive power for a moving object which is subjected to load variation. Accordingly, the moving object using the external combustion engine according to the present invention as a motive power source is available for moving objects of various sizes, such as general-purpose ships, general-purpose vehicles and robots.

In addition, since the moving object using the power generating apparatus according to the present invention as an electric power source can be downsized and simplified easily, it is available for small moving objects such as general-purpose ships, general-purpose vehicles and robots. Accordingly, considering the fact that a moving object equipped with a generator using a conventional nuclear reactor as a heat source is substantially utilized only as a military ship, the moving object using the power generating apparatus according to the present invention as an electric power source can be considered as having wider applicability.

### Brief Description of Drawings

Fig. 1 is a partial cross-sectional view of a thermo mug (Working Example 1).
Fig. 2 is a front view of a power generating apparatus (Working Example 2).
Fig. 3 is a side view of the power generating apparatus (Working Example 2).
Fig. 4 is a front view of a robot (Working Example 2).
Fig. 5 is a front view of a once-through boiler (Working Example 3).
Fig. 6 is a side cross-sectional view of the once-through boiler (Working Example 3).
Fig. 7 is a front cross-sectional view of the once-through boiler with a portion thereof shown in an enlarged manner (Working Example 3).
Fig. 8 is a control system diagram for heavy hydrogen pressure in a nuclear fusion reactor of the once-through boiler (Working Example 3).
Fig. 9 is a system diagram of a power generating apparatus using the once-through boiler (Working Example 3).
Fig. 10 is a drive system diagram for a ship in which the once-through boiler is installed (Working Example 3).
Fig. 11 is a front view of a high-temperature gas-cooled reactor (Working Example 4).
Fig. 12 is a left side view of the high-temperature gas-cooled reactor (Working Example 4).
Fig. 13 is a bottom view of the high-temperature gas-cooled reactor (Working Example 4).
Fig. 14 is an enlarged cross-sectional view showing an area around an ion beam inlet of the high-temperature gas-cooled reactor (Working Example 4).
Fig. 15 is a control system diagram for heavy hydrogen pressure in the high-temperature gas-cooled reactor (Working Example 4).
Fig. 16 is a system diagram of a power generating apparatus using the high-temperature gas-cooled reactor (Working Example 4).
Fig. 17 is a drive system diagram for a ship in which the power generating apparatus using the high-temperature gas-cooled reactor is installed (Working Example 4).
Fig. 18 is a front cross-sectional view of a mixed gas reactor (Working Example 5).
Fig. 19 is a plan cross-sectional view of the mixed gas reactor (Working Example 5).
Fig. 20 is a plan view of a metallic heating element in the mixed gas reactor (Working Example 5).
Fig. 21 is a partially-enlarged cross-sectional view of the metallic heating element in the mixed gas reactor (Working Example 5).
Fig. 22 is a system diagram of a power generating apparatus using the mixed gas reactor (Working Example 5).
Fig. 23 is a partially-enlarged view of another example of a metallic heating element in the mixed gas reactor (Working Example 6).
Fig. 24 is a partially-enlarged view of a further example of a metallic heating element in the mixed gas reactor (Working Example 7).
Fig. 25 is a side view of a power generating apparatus (Working Example 8).
Fig. 26 is a front cross-sectional view of the power generating apparatus (Working Example 8).
Fig. 27 is a plan cross-sectional view of a nuclear fuel reactor in the power generating apparatus (Working Example 8).
Fig. 28 is a perspective view of a thermoelectric module in the power generating apparatus (Working Example 8).
Fig. 29 is a partially-open plan view of the power generating apparatus (Working Example 8).

### Description of Embodiments

Embodiments of the present invention (hereinafter referred to as the "present embodiments") will now be described in detail below based on working examples. However, the present invention is not limited to the present embodiments and various modifications may be made without departing from the gist of the invention.

### Working Example 1

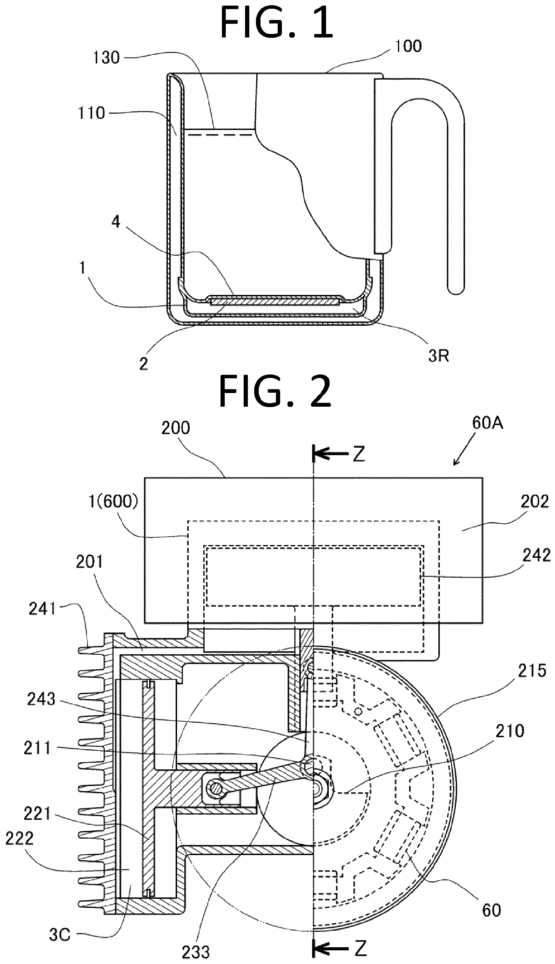

Fig. 1 a partial cross-sectional view of an example of a thermal device that uses a nuclear fusion reactor according to an embodiment of the present invention as a heat source. A thermo mug 100, being a thermal device, includes a nuclear fusion reactor 1 mounted on a bottom of a heat insulation mug provided with a heat insulation layer 110. In the nuclear fusion reactor 1, a palladium plate 2 serving as a metallic heating element is attached onto an inner surface of a vessel 4 which is a reactor body provided between an inner container and an outer layer of the thermo mug 100. Such configuration allows the heat to be easily transferred to a warm beverage 130 in the thermo mug 100. The palladium plate 2 contains a trace amount of ⁶Li as a solute on its lower surface side.

In the thermo mug 100 having the above configuration, by sealing a mixed gas 3R of heavy hydrogen and a trace amount of radon in the nuclear fusion reactor 1 at a pressure lower than the atmospheric pressure, the nuclear fusion reactor 1 starts generating heat. Thus, if the nuclear fusion reactor 1 has been charged with the mixed gas 3R before shipping, it is desirable that the entire mug 100 be wrapped with a heat insulation material for shipment. Further, since the palladium plate 2 tends to incorporate more heavy hydrogen gas as the temperature decreases, the temperature decrease activates the nuclear fusion chain reaction and causes the amount of generated heat to increase, which makes it possible to keep the warm beverage 130 at a stable temperature. It should be noted that the nuclear fusion reactor 1 is a heat source and can be considered an example of the "thermal device" on its own.

### Working Example 2

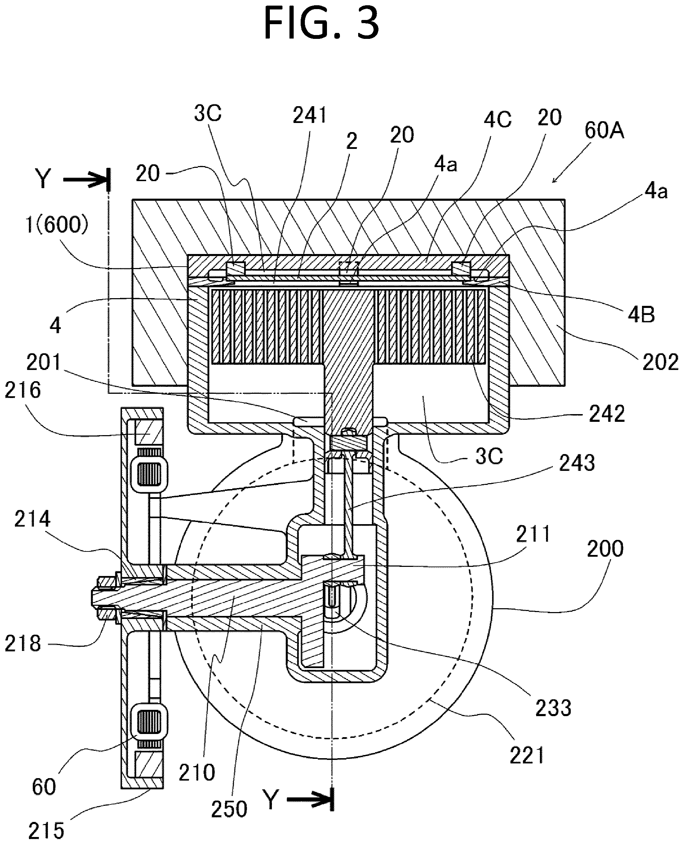

Figs. 2 and 3 are a front view and a side view, respectively, showing an example of an external combustion engine and a power generating apparatus which use a nuclear fusion reactor according to an embodiment of the present invention as a heat source. The cross-sectional portion in Fig. 3 shows a Z-Z cross-section of Fig. 2 and the cross-sectional portion in Fig. 2 shows a Y-Y cross-section of Fig. 3. A power generating apparatus 60A uses a gamma-type Stirling engine 200 as an external combustion engine provided with a nuclear fusion reactor 1. The power generating apparatus 60A can also be considered an example of the "thermal device" from the viewpoint that it uses the nuclear fusion reactor 1 as a heat source.

In the present working example, the nuclear fusion reactor 1 constitutes a high-temperature chamber of the Stirling engine 200 and has a structure in which the internal volume of the high-temperature chamber is changed by a heat exchange piston 242 moving up and down in a vessel 4. A mixed gas 3C of helium and heavy hydrogen is introduced in the high-temperature chamber as a working gas of the Stirling engine 200. The nuclear fusion reactor 1 of the present working example functions as a mixed gas reactor 600 with a configuration in which the mixed gas 3C supplies heavy hydrogen to and cools a tantalum plate 2, being a metallic heating element, in the nuclear fusion reactor 1. The tantalum plate 2 is resiliently pressed (biased) toward a cover 4C of the vessel 4 via four pieces of uranium glass 20, being an ion beam emitting substance, by four supporting arms 4a provided in an integral manner on portions 4B of the vessel 4. The tantalum plate 2 contains a trace amount of ⁶Li as a solute on the upper surface side and the uranium glass 20 is manufactured so as to intentionally cause uranium to be segregated by gravity on the lower surface side of the tantalum plate 2. As described above, the vessel 4 corresponds to an example of the "high-temperature part" and the mixed gas 3C corresponds to an example of the "working medium."

An upper portion and side surfaces of the nuclear fuel reactor 1 are covered with a heat insulation material 202. The heat exchange piston 242 communicates with a low-temperature chamber 222 through a gas passage 201 that is provided below the heat exchange piston 242. The low-temperature chamber 222 is configured such that its volume is changed by a power piston 221, and the low-temperature chamber 222 is cooled by a cooling fin 241.

A crank holder 250 is further provided in an integral manner with the vessel 4, and a crank shaft 210 supported by the crank holder 250 rotates counterclockwise in Fig. 2. The power piston 221 and the heat exchange piston 242 are coupled, via a connection rod 233 and a connection rod 243, respectively, to a crank pin 211 attached to the crank shaft 210, and the power piston 221 and the heat exchange piston 242 reciprocate in phases different from each other by 90 degrees. In the state shown in Fig. 3, since the heat exchange piston 242 is located dead center at the top, the volume becomes large on a lower-temperature side, located below the heat exchange piston 242, in the high-temperature chamber. At this time, since the average temperature of the mixed gas 3C, being the working gas, is the lowest and its pressure is also low, the power piston 221 in the state shown in Fig. 2 can move leftward in Fig. 2 with a small force. When the crank shaft 210 rotates by 180 degrees, the heat exchange piston 242 is located dead center at the bottom, the volume becomes large on a higher-temperature side, located above the heat exchange piston 242, in the high-temperature chamber. As a result, since the average temperature of the mixed gas 3C increases and its pressure also increases, the power piston 221 is driven rightward in Fig. 2 with a strong force.

When the Stirling engine 200 obtains drive power as described above and rotates at about, for example, 200 rpm to 2,000 rpm, the pressure of the mixed gas 3C makes about a threefold change at every rotation. In accordance with such change in the pressure of the mixed gas 3C, the partial pressure of the heavy hydrogen also changes; however, the diffusion rate of heavy hydrogen in the tantalum plate 2 is not rapid enough to follow the change in the pressure of the heavy hydrogen, and thus the concentration of heavy hydrogen in the tantalum plate 2 becomes almost equal to the average partial pressure of heavy hydrogen.

A pair of taper rings 214 is provided between the crank shaft 210 and a flywheel 215, and the crank shaft 210 and the fly wheel 215 are fixed in an integral manner by tightening a nut 218. A magnet 216 is mounted on the flywheel 215, and a generator 60 provided so as to face the magnet 216 converts the output of the Stirling engine 200 into electric power.

A short-time output control for the Stirling engine 200 can be achieved by the generator 60 controlling its own revolutions per minute ("RPM"). The Stirling engine 200 makes no output while it is stopped, and starts to round when the generator 60 becomes a magnet according to the rotation direction of the flywheel 215. If the temperature of the nuclear fusion reactor 1 is stable, the Stirling engine 200 which starts rotation generates an almost constant torque and the power generating apparatus 60A thus generates electric power almost in proportion to the RPM.

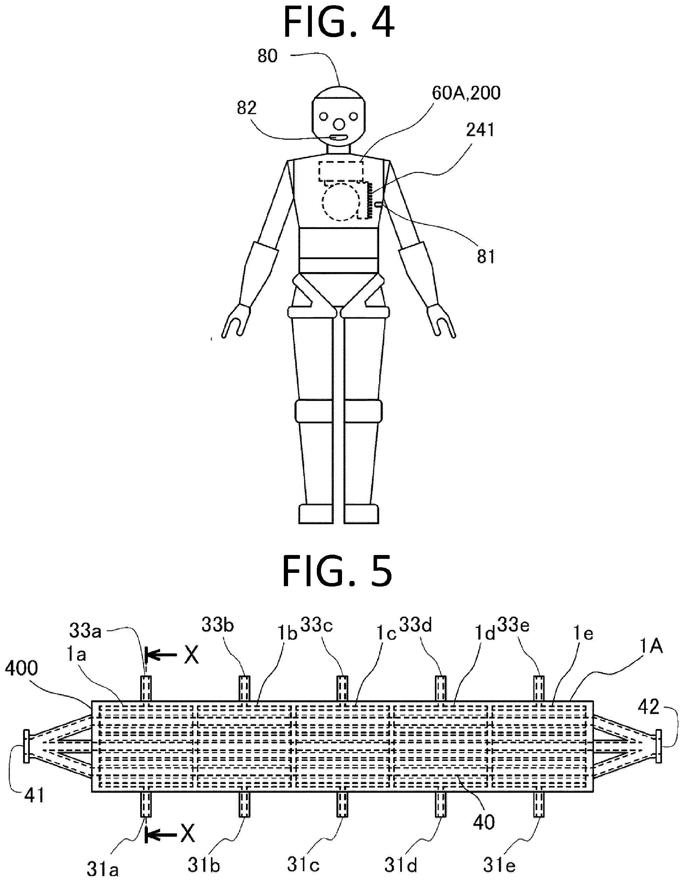

Fig. 4 is a front view of an example of a moving object using the power generating apparatus according to the present invention as an electric power source. A bipedal walking robot 80, being a moving object, includes the power generating apparatus 60A installed in its torso part. A cooling air inlet port 81 is provided at a left flank part of the robot 80 in order to cool a cooling fin 241 of the Stirling engine 200 in the power generating apparatus 60A, and an exhaust port 82 for exhaust heat is provided at a part corresponding to a mouth of the robot 80.

### Working Example 3

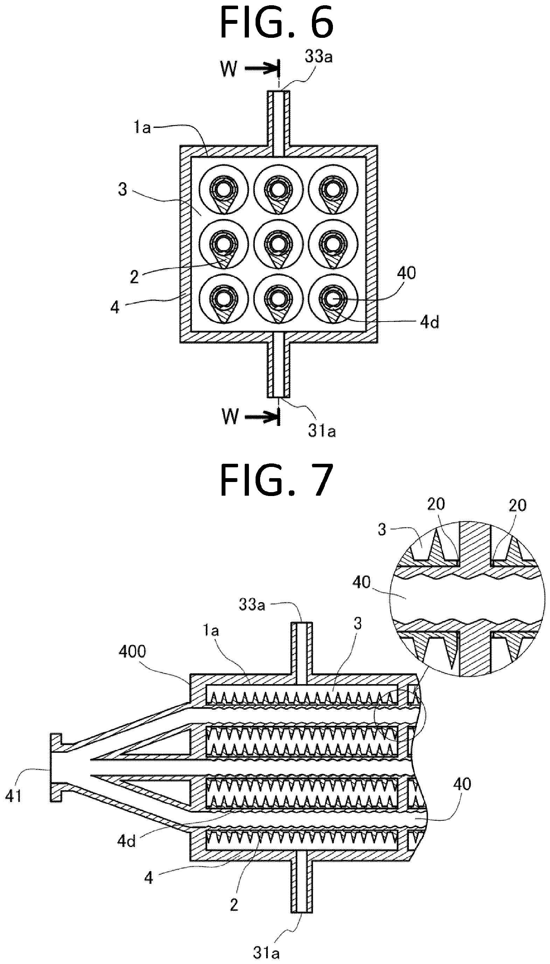

Figs. 5, 6 and 7 are a front view, a side cross-sectional view and a front cross-sectional view with a partially enlarged view, respectively, of a once-through boiler that includes a plurality of nuclear fusion reactors according to the present invention, the nuclear fusion reactors being arranged in series. Fig. 6 is an enlarged X-X cross-section of Fig. 5, and Fig. 7 is a W-W cross-section of Fig. 6.

The once-through boiler 400 includes a nuclear fusion reactor 1A in which five nuclear fusion reactors 1a-1e in total are arranged in series. During the operation of the once-through boiler 400, temperatures become higher in the ascending order of the nuclear fusion reactors 1a-1e, and a heavy hydrogen gas 3 of five different pressures is supplied to the respective nuclear fusion reactors 1a-1e. The nuclear fusion reactors 1a-1e have respective gas inlets 31a-31e through which the heavy hydrogen gas 3 of different pressures is supplied and respective gas outlets 33a-33e through which a heavy hydrogen gas 3 containing helium gas, being a product of the nuclear fusion reaction, is discharged. The once-through boiler 400 can be considered as corresponding to an example of the "thermal device" from the viewpoint that it uses the nuclear fusion reactor 1A with the nuclear fusion reactors 1a-1e arranged in series as a heat source.

In the nuclear fusion reactor 1A, a wall 4, extending through the nuclear fusion reactors 1a-1e, and water pipes 4d are provided in an integral manner, and a water passage 40 having a helical channel is formed in each water pipe 4d. The outer periphery of the water pipe 4d in the nuclear fusion reactors 1a-1e is covered with a nickel pipe 2 formed in a helical fin shape. The nickel pipe 2 contains a trace amount of lithium, and a vessel 4 serving as a reactor body and an end of the nickel pipe 2 are in contact with each other via a stainless-steel washer 20, as shown in an enlarged diagram in the circle on the upper right part of Fig. 7. The stainless-steel washer 20 is formed by stretching stainless-steel pieces with a uranium alloy of an ion beam emitting substance sandwiched therebetween into a thin washer, and a surface of the stainless-steel washer 20 is coated with CaO so as to prevent deposition. In the once-through boiler 400 having such configuration, when the heavy hydrogen gas 3 is supplied into the nuclear fusion reactors 1a-1e, the heavy hydrogen is caused to be contained as a solute in the nickel pipe 2, which causes heat to be generated, and water introduced from a water inlet port 41 is heated inside the water passage 40 and the resulting steam is discharged from a steam outlet port 42. As described above, the water passage 40 corresponds to an example of the "high-temperature part" and the water flowing through the water passage 40 corresponds to an example of the "cooling medium" and the "working medium."

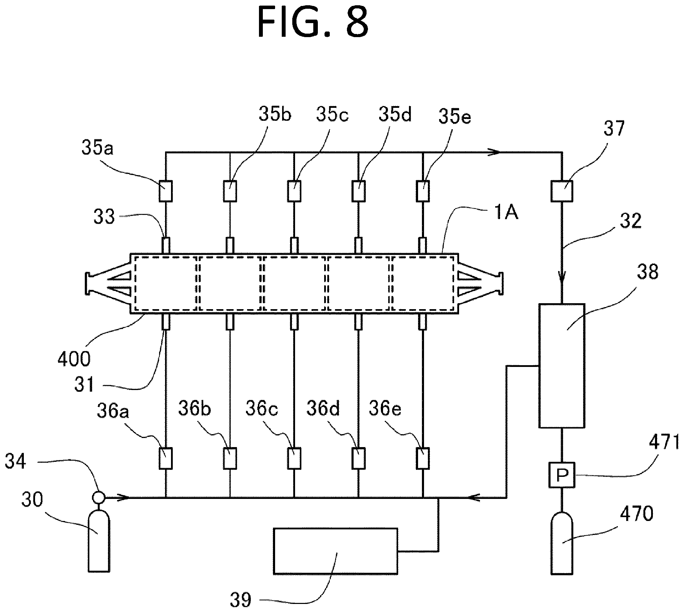

Fig. 8 is a control system diagram for heavy hydrogen pressure in the nuclear fusion reactor 1A of the once-through boiler 400. The heavy hydrogen gas is supplied from a heavy hydrogen cylinder 30 through a pressure-reducing valve 34, or from a reserve tank 39, to each nuclear fusion reactor 1a-1e. In the present working example, the supply pressure of the heavy hydrogen gas 3 to each of the nuclear fusion reactors 1a-1e is set higher than the internal pressure of the reserve tank, compressor pumps 36a-36e are provided on the gas inlet 31 sides of the respective nuclear fusion reactors 1a-1e, and pressure regulators 35a-35e for regulating the amount of heavy hydrogen contained as a solute are provided on the gas outlet 33 sides of the respective nuclear fusion reactors 1a-1e. With such configuration, the pressures of the heavy hydrogen gas 3 to be supplied to the respective nuclear fusion reactors 1a-1e can be regulated to levels suitable for the respective temperatures of the nuclear fusion reactors 1a-1e. The heavy hydrogen gas 3 containing helium discharged from the pressure regulators 35a-35e is delivered together by a compressor pump 37 to a heavy hydrogen permeable device 38 where the gas is separated into heavy hydrogen and helium. The heavy hydrogen gas 3 that is transmitted through the heavy hydrogen gas permeable device 38 is returned to the reserve tank 39 and the separated and concentrated helium gas is compressed by a pump 471 so as to be delivered to and stored in a helium gas cylinder 470.

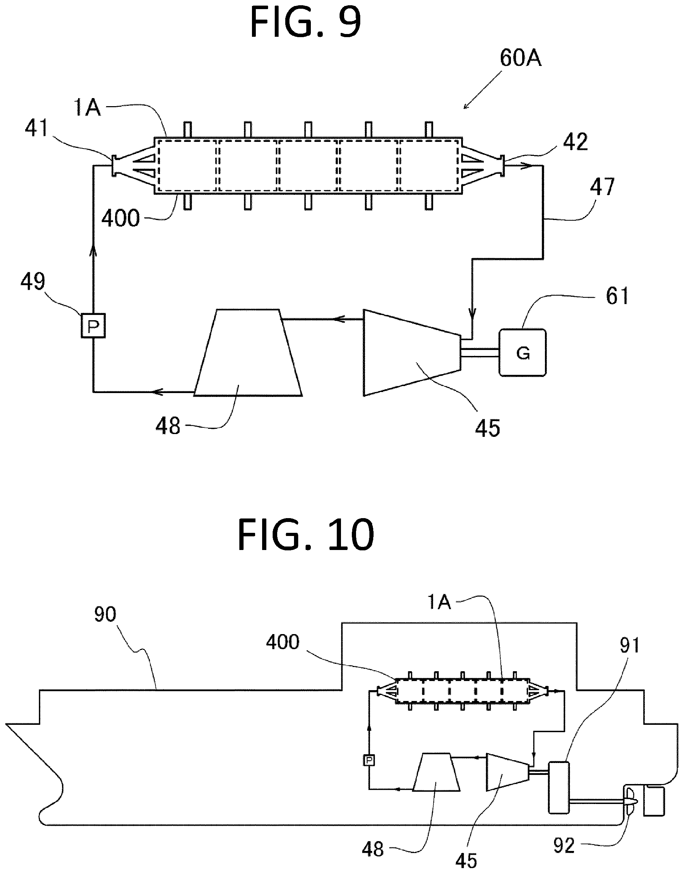

Fig. 9 is a system diagram of a power generating apparatus 60A using the once-through boiler 400. The steam discharged from the steam outlet port 42 passes through a steam conduit 47 and drives a steam turbine 45, and the output of the steam turbine 45 is converted into electric power by a generator 61. The steam that has passed through the steam turbine 45 is introduced into a cooler 48 and liquefied. The resulting water from the cooler 48 is pressurized by a high-pressure pump 49 and re-supplied to the once-through boiler 400 from the water inlet port 41.

Fig. 10 is a drive system diagram for a ship 90 in which the once-through boiler 400 is installed. The ship 90, being a moving object, gains propulsion by decelerating the drive force of the steam turbine 45 connected to the once-through boiler 400 using a decelerator 91 and rotating a screw 92.

### Working Example 4

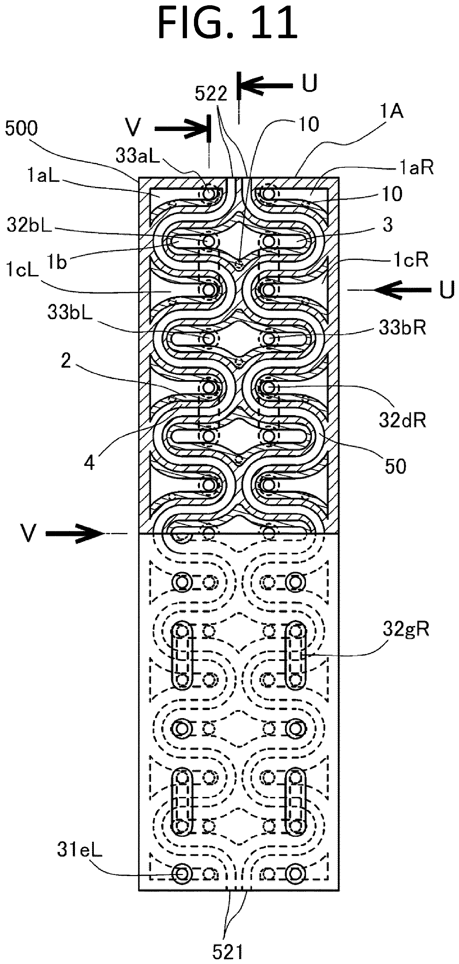

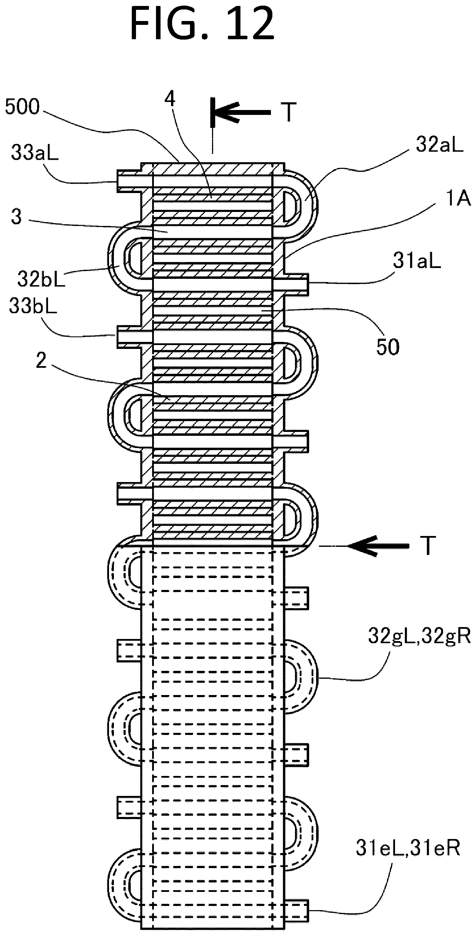

Figs. 11, 12 and 13 are a front view, a left side view and a bottom view, respectively, showing a nuclear fusion reactor comprising a plurality of nuclear fusion reactors according to the present invention arranged in series. The cross-sectional portion in Fig. 12 shows a V-V cross-section of Fig. 11, and the cross-sectional portion in Fig. 11 shows a T-T cross-section of Fig. 12. Since a nuclear fusion reactor 1A is bilaterally symmetric in the front view of Fig. 11 and the members denoted with "R" and the members denoted with "L" are located at positions symmetric to each other, reference symbols for some members are omitted. For example, a gas inlet 31eR and a conduit 32gL are located at positions symmetric to a gas inlet 31eL and a conduit 32gR, respectively, and these symmetrically-located components are shown so as to overlay one another in the left side view of Fig. 12.

In the present working example, the nuclear fusion reactor 1A constitutes a high-temperature gas-cooled reactor 500 and includes 23 nuclear fusion reactors in total. Since nuclear fusion reactors located at higher positions have higher temperatures, heavy hydrogen gases of five different pressures are supplied to four or five nuclear fusion reactors, respectively. For example, a heavy hydrogen gas 3 introduced from gas inlets 31aL, 31aR is supplied to the nuclear fusion reactors 1aL, 1aR, 1b, 1cL and 1cR via conduits 32aL, 32aR, 32bL and 32bR. As a result, the heavy hydrogen gas 3 of a common pressure is supplied to these five nuclear fusion reactors. A heavy hydrogen gas 3 containing helium gas, being a product of the nuclear fusion reaction, is discharged through gas outlets 33aL, 33aR. The high-temperature gas-cooled reactor 500 can be considered as corresponding to an example of the "thermal device" from the viewpoint that it uses the nuclear fusion reactor 1A as a heat source.

Each nuclear fusion reactor is cooled by gas which is introduced in a compressed state from a gas inlet 521 and flows through a gas passage 50, and the gas which has been heated to a high temperature is discharged from the gas outlet 522. The gas passage 50 of each nuclear fusion reactor is defined by a wall 4, and the passage of the heavy hydrogen gas is provided with a metallic heating element 2 along the wall 4. With such configuration, heat from the metallic heating element is transferred to the gas in the gas passage 50. In the nuclear fusion reactor 1A, since the temperature of the nuclear fusion reactors 1aL, 1aR, 1b, 1cL and 1cR located at the highest area becomes the highest, for example, gold is used as the metallic heating element 2 for these nuclear fusion reactors and, for example, palladium is used for the metallic heating element 2 for the other nuclear fusion reactors. In this way, the gas passage 50 corresponds to an example of the "high-temperature part" and the gas flowing through the gas passage 50 corresponds to the "cooling medium" and "working medium."

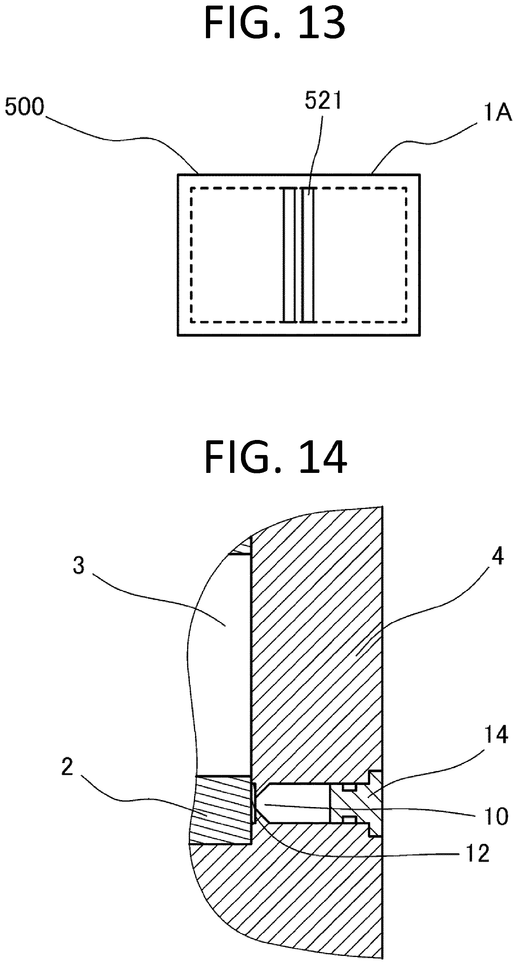

Fig. 14 is an enlarged cross-sectional view showing an area around an ion beam inlet 10 in a U-U cross-section of Fig. 11. A single ion beam inlet 10 is provided on a rear side of a vessel 4 of each nuclear fusion reactor. The ion beam inlet 10 and the metallic heating element 2 are isolated from each other by a thin heavy hydrogen diffusion prevention layer 12 and the ion beam inlet 10 is sealed by a cover 14, which prevents heavy hydrogen from the metallic heating element 2 from escaping to the outside. By opening the cover 14 and inserting an ion accelerator into the ion beam inlet 10 to supply ion beams with the interior of the ion beam inlet 10 placed in a vacuum condition, the nuclear fusion reactor can be activated. In this process, ion beams using ²H, ⁴He and ⁶Li are preferable in terms of efficiency. Alternatively, a substance emitting a strong α ion beam (e.g., ²¹⁰Po) may be inserted into the ion beam inlet 10 instead of the ion accelerator.

In addition, a trace amount of lithium may be contained as a solute in the entire metallic heating element 2. In such case, by inserting an easily-handleable ion beam emitting substance, such as ²⁴¹Am, into the ion beam inlet 10 so as to bring it close to the heavy hydrogen diffusion prevention layer 12, it is possible to activate each nuclear fusion reactor so as to start heat generation.

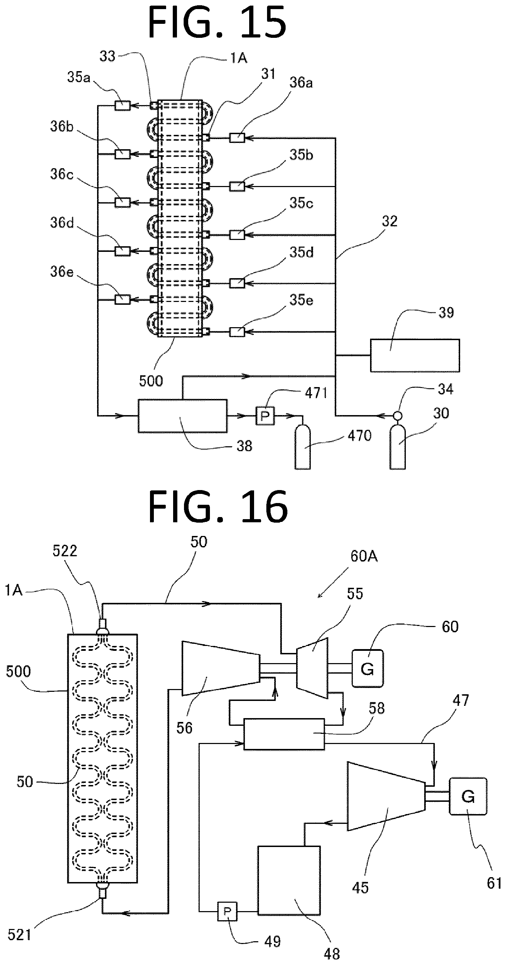

Fig. 15 is a control system diagram for heavy hydrogen pressure in the nuclear fusion reactor 1A constituting the high-temperature gas-cooled reactor 500. The heavy hydrogen gas 3 is supplied from a heavy hydrogen cylinder 30 through a pressure-reducing valve 34, or from a reserve tank 39, to each nuclear fusion reactor. The supply pressure of the heavy hydrogen gas 3 to each of the nuclear fusion reactors which use the metallic heating element 2 made of palladium is lower than the internal pressure of the reserve tank, a pressure regulator 35a-35e for regulating the amount of heavy hydrogen contained as a solute is provided on each gas inlet 31 side, and a compressor pump 36b-36e is provided on each gas outlet 33 side. With such configuration, the pressures of the heavy hydrogen gas 3 to be supplied to the respective nuclear fusion reactors can be regulated to levels suitable for the respective temperatures of the nuclear fusion reactors.

On the other hand, since the pressure of the heavy hydrogen gas 3 needed for the metallic heating element 2 made of gold is higher than the internal pressure of the reserve tank, the compressor pump 36a is provided on the gas inlet 31 side and the pressure regulator 35a is provided on the gas outlet 33 side so as to appropriately regulate the supply pressure of the heavy hydrogen gas 3. The heavy hydrogen gas 3 containing helium discharged from the pressure regulator 35a and each of the compressor pumps 36b-36e is delivered to a heavy hydrogen permeable device 38 where the gas is separated into heavy hydrogen and helium. The heavy hydrogen gas 3 transmitted through the heavy hydrogen permeable device 38 is returned to the reserve tank 39 and the separated and concentrated helium gas is compressed by a pump 471 so as to be delivered to and stored in a helium gas cylinder 470.

Fig. 16 is a system diagram of a power generating apparatus 60A using the high-temperature gas-cooled reactor 500. A high-temperature gas discharged from the gas outlet 522 passes through a gas passage 50 and activates a gas turbine 55 and the gas is then introduced into a heat exchanger 58. The gas cooled by the heat exchanger 58 is pressurized by a compressor 56 and returned to the high-temperature gas-cooled reactor 500 via the gas inlet 521. Water heated by the heat exchanger 58 is turned into steam and, after passing through a steam conduit 47 and activating a steam turbine 45, the steam is introduced into a cooler 48 and liquefied. The resulting water from the cooler 48 is pressurized by the high-pressure pump 49 and supplied again to the heat exchanger 58. The output of the gas turbine 55 and the output of the steam turbine 45 are converted into electric power by their respective generators 60, 61. The power generating apparatus 60A can be considered as corresponding to an example of the "thermal device" from the viewpoint that it uses the nuclear fusion reactor 1A as a heat source.

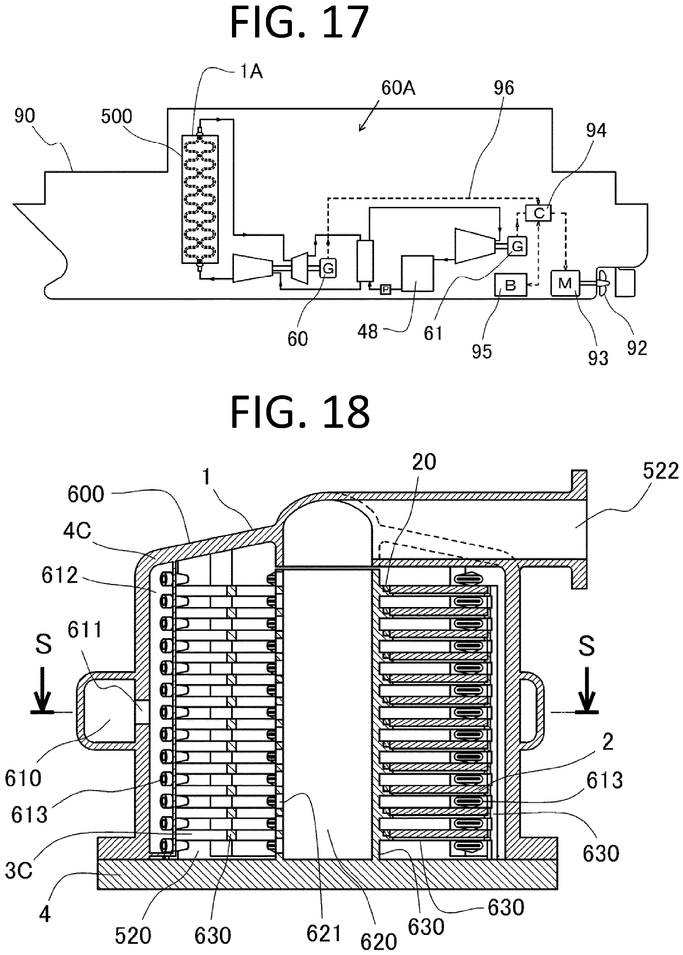

Fig. 17 is a drive system diagram of a ship 90 in which the power generating apparatus 60A using the high-temperature gas-cooled reactor 500 is installed. The ship 90, being a moving object, gains propulsion by sending electric power from the generators 60, 61 to a controller 94 through power transmission lines 96 and driving an electric motor 93 so as to rotate a screw 92. Excess electric power is stored in a battery 95 so as to be used as power consumed in the ship 90, as well as being used as supplementary electric power for accelerating the ship 90 during travelling.

### Working Example 5

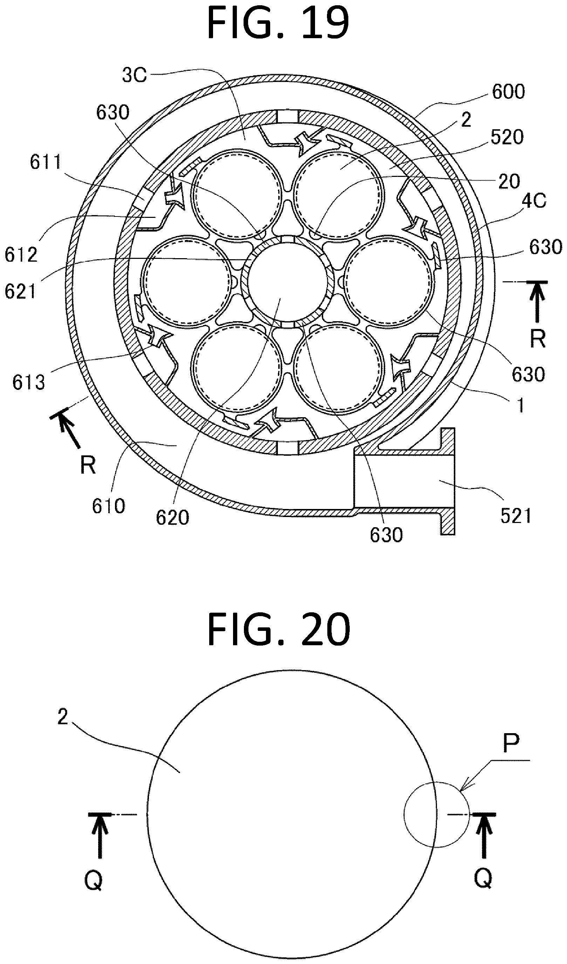

Figs. 18 and 19 are a front cross-sectional view and a plan cross-sectional view, respectively, of an example of a nuclear fusion reactor according to another embodiment of the present invention. Fig. 18 is an R-R cross-section of Fig. 19 and Fig. 19 is an S-S cross-section of Fig. 18.

In the present working example, a nuclear fusion reactor 1 constitutes a mixed gas reactor 600 using a mixed gas 3C of heavy hydrogen and helium, and includes a plurality of mounting tables 630 placed within a space defined by a vessel 4, serving as a reactor body, and its cover 4C. Six disc-shaped metallic heating elements 2 are mounted on each mounting table 630 in an easily-removable manner (72 metallic heating elements in total are mounted on 12 mounting tables). A depleted uranium alloy 20, being an ion beam emitting substance, is fixed so as to be adjacent to each metallic heating element 2 on each mounting table 630, the number of depleted uranium alloys 20 being the same as the number of metallic heating elements 2 on each mounting table 630. Although the depleted uranium alloy 20 is shown in a semicircular shape in the drawing, the depleted uranium alloy 20 is actually formed in a thin plate shape with one side thereof being in close contact with the metallic heating element 2. The mixed gas reactor 600 can be considered as corresponding to an example of the "thermal device" from the viewpoint that it uses the nuclear fusion reactor 1 as a heat source.

In the nuclear fusion reactor 1 of the present working example, a low-temperature cooling medium (coolant) gas flowing from a gas inlet 521 is distributed from a low-temperature chamber 610 by distribution ports 611 and introduced into six distribution passages 612, and then sent into gas chambers 520 from 13 nozzles 613 arranged in the vertical direction in the drawing. In the nuclear fusion reactor 1, the direction and position of each nozzle 13 are set so as to prevent the cooling medium gas above and below each metallic heating element 2 from building up and so as to form a clockwise swirling flow in the gas chamber 520, in order to make the temperature of each metallic heating element 2 uniform. For example, in Fig. 18, the nozzles 613 located at the right part of the nuclear fusion reactor 1 are shown with their cooling medium gas ejection ports, and the nozzles 613 located at the left part of the nuclear fusion reactor 1 are shown with the cross-sectional shape of the distribution passage 612. The heated cooling medium gas is introduced into a high-temperature gas chamber 620 from a high-temperature gas discharge port 621 that opens in a cylindrical support located at the center of the mounting table 630 and discharged from the gas outlet 522. In this way, the gas chamber 520 and the high-temperature gas chamber 620 correspond to an example of the "high-temperature part" and the cooling medium gas corresponds to an example of the "working medium."

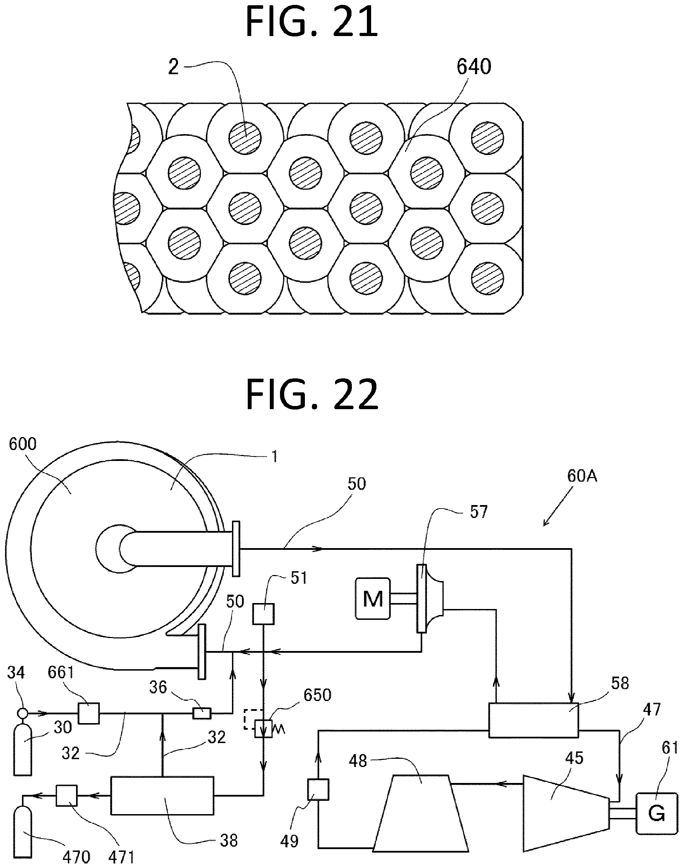

Fig. 20 is a plan view showing only the metallic heating element 2 in the mixed gas reactor 600. Fig. 21 is an enlarged view showing a Q-Q cross-section at a portion P in Fig. 20. The metallic heating element 2 of the present working example is made of tantalum containing a trace amount of lithium and formed by sintering spherical particles having a size of about 0.5 mm into a low density. Since such metallic heating element 2 has a lot of pores and has a continuous vent hole 640 formed by continuous pores, the metallic heating element 2 has an advantage in which it can easily discharge helium generated thereinside.

Fig 22 is a system diagram of a power generating apparatus 60A using the mixed gas reactor 600. A high-temperature mixed gas 3C discharged from the mixed gas reactor 600 is delivered through a gas passage 50, cooled by a heat exchanger 58 and returned to the mixed gas reactor 600 by a blower 57. Water heated by the heat exchanger 58 is turned into steam and, after passing through a steam conduit 47 and activating a steam turbine 45, the steam is introduced into a cooler 48 and liquefied. The resulting water from the cooler 48 is pressurized by a high-pressure pump 49 and supplied again to the heat exchanger 58. The output of the steam turbine 45 is converted into electric power by a generator 61. The power generating apparatus 60A can be considered as corresponding to an example of the "thermal device" from the viewpoint that it uses the nuclear fusion reactor 1 as a heat source.

In the power generating apparatus 60A of the present working example, the partial pressure of the heavy hydrogen contained in the mixed gas 3C is measured by a heavy hydrogen partial pressure analyzer 51 mounted on the gas passage 50 on the low-temperature side. Based on the measurement result, if the partial pressure of the heavy hydrogen in the mixed gas 3C is insufficient, the amount of heavy hydrogen gas which is supplied from a heavy hydrogen cylinder 30 with its pressure reduced by a pressure-reducing valve 34 is regulated using a mass flow controller 661, being a device for regulating the amount of heavy hydrogen contained as a solute, and the resulting heavy hydrogen gas is compressed by a pump 36 and supplied to the gas passage 50. On the other hand, when the amount of helium generated increases and the pressure of the mixed gas 3C also increases, part of the mixed gas 3C is delivered to a heavy hydrogen permeable device 38 via a constant pressure control valve 650 where the mixed gas 3C is separated into heavy hydrogen and helium. The heavy hydrogen transmitted through the heavy hydrogen permeable device 38 is delivered through a conduit 32, compressed by a pump 36 together with the heavy hydrogen gas from the mass flow controller 661 and returned to the gas passage 50. The helium separated and concentrated in the heavy hydrogen permeable device 38 is compressed by a pump 471 so as to be delivered to and stored in a helium gas cylinder 470.

### Working Example 6

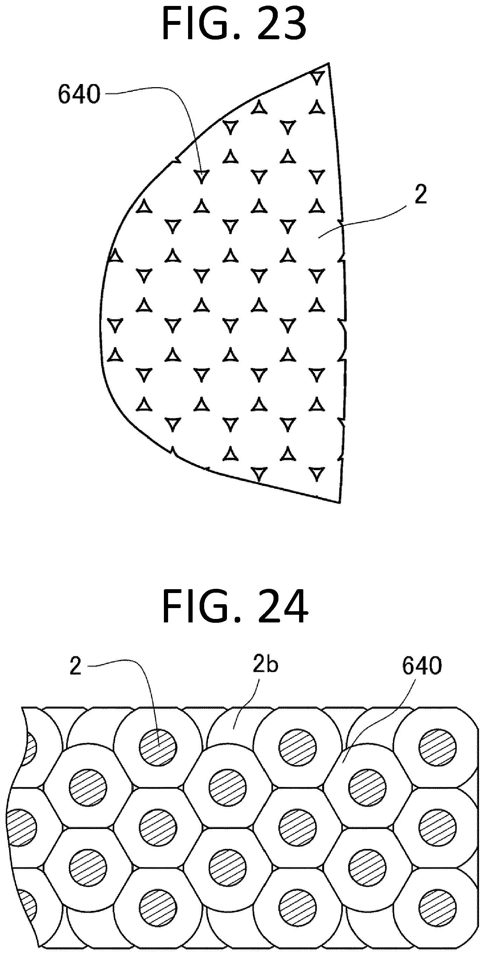

Fig. 23 is a partially-enlarged view of another example of the metallic heating elements 2 in the mixed gas reactor 600, the partially-enlarged view corresponding to the portion P in Fig. 20. Metallic heating elements 2 of the present working example are formed of tantalum wires containing a trace amount of lithium and having a constant length, and the tantalum wires are put together into a planar bundle, compressed and then sintered. In such metallic heating elements 2, gaps between the wires serve, as-is, as linear continuous vent holes 640.

### Working Example 7

Fig. 24 is a partially-enlarged view of a further example of the metallic heating element 2 in the mixed gas reactor 600. A metallic heating element 2 of the present working example has a similar structure to the metallic heating element 2 of Working Example 5 shown in Fig. 21, except that it is formed of spherical tantrum particles with their surfaces plated with a palladium layer of 1.5 µm and the palladium layer has a base metal 2b in which substance(s) to be subjected to nuclear transmutation have been embedded. According to the metallic heating element 2 of the present working example, it is possible to melt the base metal 2b after reaction in the mixed gas reactor 600 for several weeks, and to collect a substance which has been subjected to nuclear transmutation and the remaining substance to be subjected to transmutation.

### Working Example 8

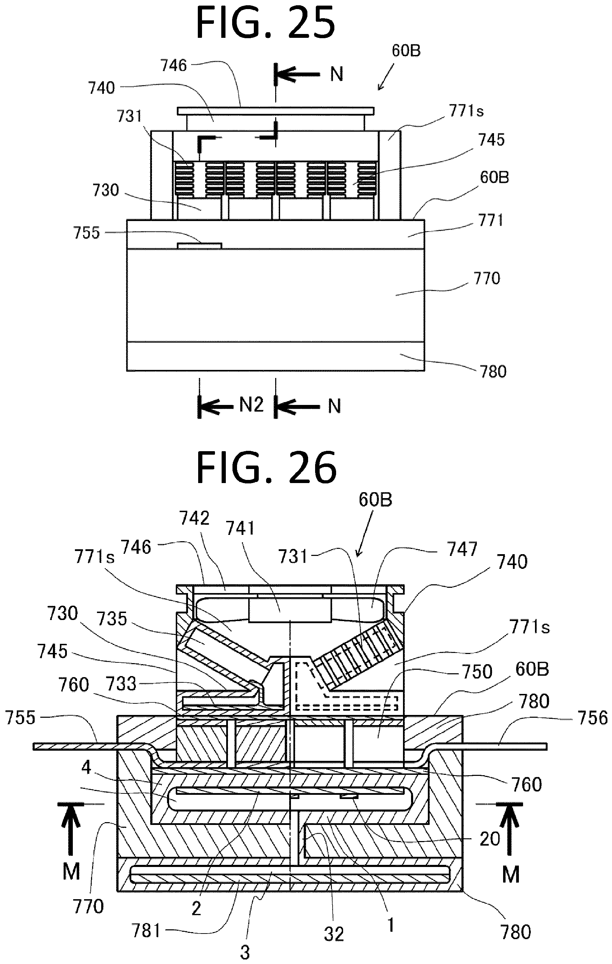

Figs. 25 and 26 are a side view and a front cross-sectional view, respectively, showing another example of a power generating apparatus that uses a nuclear fusion reactor according to the present invention as a heat source. The right side of the alternate long and short dashed lines in Fig. 26 shows an N-N cross-section of Fig. 25, while the left side of the alternate long and short dashed lines shows an N-N2 cross-section of Fig. 25.

In the present working example, a power generating apparatus 60B is formed by a combination of a nuclear fusion reactor 1 and a thermoelectric module 750. An electric fan 740 is provided on the uppermost part of the power generating apparatus 60B so that the air introduced from an introduction port 745 cools a cooling fin 731 and is then discharged from a discharge port 746 provided on an upper portion 742 of the electric fan 740. A heat insulation vessel 770 is provided on a lower portion of the power generating apparatus 60B so as to surround the nuclear fusion reactor 1. On each of a front surface and a rear surface in an upper portion of a cover 771 of the heat insulation vessel 770, four heat pipes 730 (eight heat pipes in total) are arranged side-by-side, and guide plates 771s are arranged so as to be adjacent the heat pipes 730. Such configuration can cause the air to pass through the cooling fin 731 without detouring therearound. The power generating apparatus 60B can be considered as corresponding to the "thermal device" from the viewpoint that it uses the nuclear fusion reactor 1 as a heat source. Further, the thermoelectric module 750 corresponds to an example of the "thermoelectric conversion unit."

A heavy hydrogen absorption box 780 containing a heavy hydrogen absorption material 781 is arranged below the heat insulation vessel 770. The nuclear fusion reactor 1 and the heavy hydrogen absorption box 780 are connected to each other by a heavy hydrogen gas conduit 732 and the partial pressure of the heavy hydrogen gas in the nuclear fusion reactor 1 is kept stable with the heavy hydrogen absorption material 781 discharging heavy hydrogen gas upon consumption of heavy hydrogen.

The thermoelectric module 750 is arranged between the nuclear fusion reactor 1 and the electric fan 740 and mounted on an upper surface of a vessel 4 of the nuclear fusion reactor 1 with an insulating film 760 interposed therebetween. The eight heat pipes 730 are collectively attached to an upper surface of thermoelectric module 750 with an insulating film 760 interposed therebetween. In Fig. 26, the right side of the alternate long and short dashed lines shows a side view of the heat pipe 730 and the left side of the alternate long and short dashed lines shows a cross-sectional view of the heat pipe 730. On the bottom surfaces of the heat pipes 730, a wick 733 formed by crossing and stacking thin metal wires is provided and the wick 733 is immersed in a working fluid. With the provision of such wick 733, even if the apparatus is tilted to some extent, the working fluid will still come into contact with the entire bottom surfaces of the heat pipes 730 and evaporate thereon. Further, when a fan 747 is rotated by a motor 741 of the electric fan 740, the air is introduced from an inlet port 745 and passes through the cooling fin 731, whereby an upper portion of the heat pipe 730 is cooled. The evaporated working fluid is cooled and liquefied at such portion and the liquefied working fluid then adheres to an inner wall 735 of the heat pipe 730, moves along a thread-like portion provided upright from a central portion of the wick 733, and falls down onto the bottom surface of the heat pipe 730.

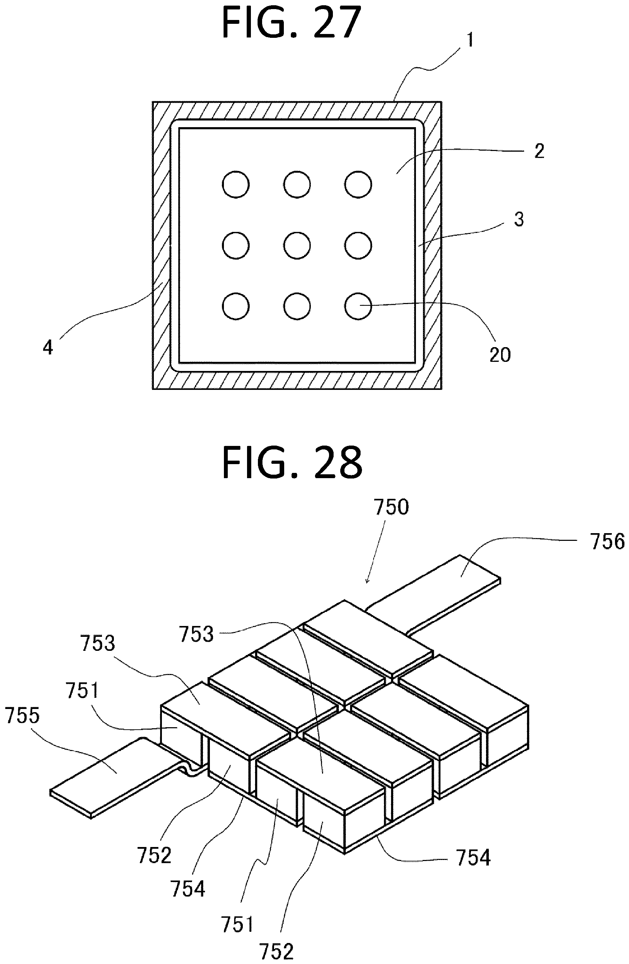

Fig. 27 is a plan cross-sectional view showing only a nuclear fuel reactor 1 in the power generating apparatus 60B, which shows an M-M cross-section of Fig. 26. The vessel 4, being a reactor body of the nuclear fusion reactor 1, contains heavy hydrogen gas 3 and a nickel plate 2 is attached, as a metallic heating element, onto an upper surface on the inner side of the vessel 4. Nine pieces of americium 20, being an ion beam emitting substance, are attached onto a lower surface of the nickel plate 2, with the americium 20 being wrapped with gold foil. In addition, the nickel plate 2 contains ⁶Li as a solute on its lower surface side and, by injecting the heavy hydrogen gas 3 into the nuclear fusion reactor 1, heat generation is started.

Fig. 28 is a perspective view of a thermoelectric module 750 in the power generating apparatus 60B. The thermoelectric module 750 includes eight pairs of p-type thermoelectric elements 751 and n-type thermoelectric elements 752, and each pair of thermoelectric elements is connected in series by conductors 753, 754. Both ends of the connected thermoelectric elements are connected to conductors 755, 756 for extracting the electric power to the outside.

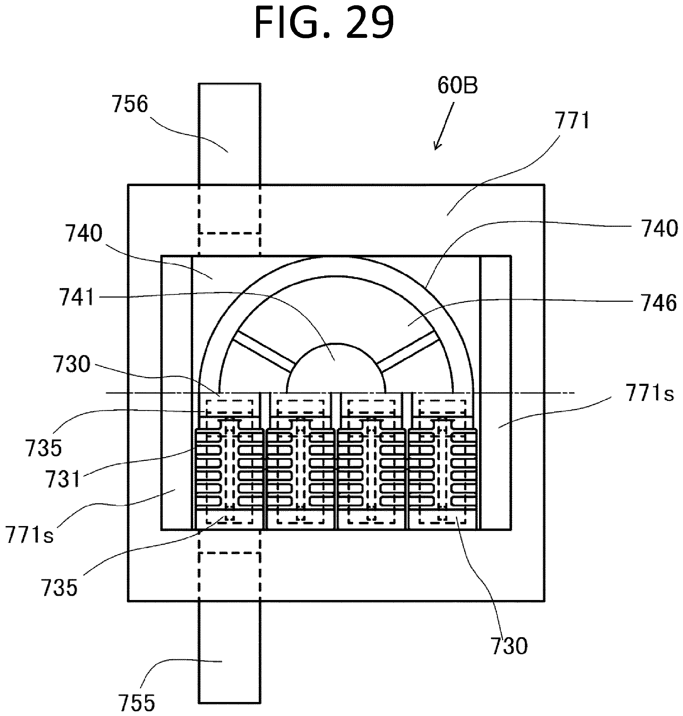

Fig. 29 is a partially-open plan view of the power generating apparatus 60B. In Fig. 29, the lower side of the alternate long and short dashed lines is depicted so as to be opened such that part of the electric fan 740 is omitted whereas the four heat pipes 730 located below the electric fan 740 are shown. As shown in Fig. 29, the most capacity above the heat pipes 730 is occupied by the cooling fin 731 and the space inside the inner wall 735 is reduced.

The embodiments and working examples described above are intended to assist in easier understanding of the present invention and they are not intended to limit the interpretation of the present invention. Components and their arrangements, materials, conditions, shapes, sizes, etc. included in the embodiments and working examples are not limited to those described in the embodiments and working examples, and appropriate changes may be made thereto. In addition, some configurations indicated in different embodiments or working examples may be substituted to or combined with each other. Further, the present invention may be expressed as follows.

### Industrial Applicability

The present invention can achieve inexpensive nuclear fusion reactors of various sizes, which do not require a plasma magnetic confinement device, which do not emit gamma rays or neutron rays, which are free from exhaustion of resources, unlike the nuclear reactors utilizing conventional nuclear fission, and which are easily-controllable and highly-safe through having low radioactivity. Accordingly, the present invention is widely applicable to various industrial fields related to an energy source, a heat source, a motive power source and an electric power source, as well as apparatuses, systems and methods utilizing the same.

### Reference Signs List

1, 1a, 1aL, 1aR, 1b, 1c, 1cL, 1cR, 1d, 1e...Nuclear fusion reactor (thermal device)
1A...Fusion reactor with multiple fusion reactors arranged in series (thermal device)
2... Palladium plate, nickel, pipe, nickel plate, tantalum plate (metallic heating element)
2b...Metal having a substance to be subjected to nuclear transmutation embedded therein (base metal)
3...Heavy hydrogen gas
3C...Mixed gas of helium and heavy hydrogen (working fluid)
3R...Mixed gas of radon and heavy hydrogen
4...Vessel serving as a reactor body (high-temperature part)
4a...Supporting arm
4B...Portions of the vessel
4C...Cover of the vessel
4d...Water pipe
10...Ion beam inlet
12...Heavy hydrogen diffusion prevention layer
14...Cover
20...Depleted uranium alloy, stainless-steel washer, uranium glass, americium (ion beam emitting substance)
30...Heavy hydrogen cylinder
31, 31aL, 31aR...gas inlet
32...Heavy hydrogen gas conduit
32aL, 32aR, 32bL, 32bR...Conduit
33, 33a, 33aL, 33aR, 33b, 33c, 33d, 33e...Gas outlet
34...Pressure-reducing valve
35, 35a, 35b, 35c, 35d, 35e...Pressure regulator (device for regulating the amount of heavy hydrogen contained as a solute)
36...Pump
36a, 36b, 36c, 36d, 36e, 37...Compressor pump
38...Heavy hydrogen permeable device
39...Reserve tank
40...Water passage (High-temperature part)
41...Water inlet port
42...Steam outlet port
45...Steam turbine
47...Steam conduit
48...Cooler
49...High pressure pump
50...Gas passage (high-temperature part)
51...Heavy hydrogen partial pressure analyzer
55...Gas turbine
56...Compressor
57...Blower
58...Heat exchanger
60, 61...Generator
60A, 60B...Power generating apparatus (thermal device)
80...Bipedal walking robot (moving object)
81...Cooling air inlet port
82...Exhaust port
90...Ship (moving object)
91...Decelerator
92...Screw
93...Electric motor
94...Controller
95...Battery
96...Power transmission line
100...Thermo mug (thermal device)
110...Heat insulation layer
130...Warm beverage
200...Stirling engine
201...Gas passage
202...Heat insulation material
210...Crank shaft
211...Crank pin
214...Taper ring
215...Fly wheel
216...Magnet
218...Nut
221...Power piston
222...Low-temperature chamber
233, 243...Connection rod
241...Cooling fin
242...Heat exchange piston
250...Crank holder
400...Once-through boiler (thermal device)
470...Helium gas cylinder
471...Pump
500...High-temperature gas-cooled reactor (thermal device)
520...Gas chamber (high-temperature part)
521...Gas inlet
522...Gas outlet
600...Mixed gas reactor (thermal device)
610...Low temperature chamber
611...Distribution ports
612...Distribution passage
613...Nozzle
620...High-temperature gas chamber (high-temperature part)
621...High-temperature gas discharge port
630...Mounting table
640...Continuous vent hole
650...Constant pressure control valve
661...Mass flow controller (device for regulating the amount of heavy hydrogen contained as a solute)
730...Heat pipe
731...Cooling fin
733...Wick
735...Inner wall
740...Electric fan
741...Motor
742...Upper portion of the electric fan
745...Introduction port
746...Discharge port
747...Fan
750...Thermoelectric module (thermoelectric conversion unit)
751...p-type thermoelectric element
752...n-type thermoelectric element
753, 754, 755, 756...Conductor
760...Insulating film
770...Heat insulation vessel
771...Cover
771s...Guide plate
780...Heavy hydrogen absorption box
781...Heavy hydrogen absorption material

## Claims

1. A nuclear fusion reactor, comprising:
a vessel serving as a reactor body;
a metallic heating element that contains heavy hydrogen contained in the vessel as a solute;
a heavy hydrogen gas contained in the vessel, the heavy hydrogen gas being in an amount that allows 0.005% to 5% of heavy hydrogen to be contained as a solute in the metallic heating element based on the atomic ratio; and
a mechanism for irradiating the metallic heating element with an ion beam.

2. The nuclear fusion reactor according to claim 1, wherein the metallic heating element contains 0.0005% to 1% lithium as a solute in a portion receiving a supply of the ion beam or in the entire metallic heating element, based on the atomic ratio.

3. The nuclear fusion reactor according to claim 2, wherein:
a portion containing lithium as a solute in the metallic heating element faces the heavy hydrogen gas; and
the heavy hydrogen gas contains an ion beam emitting substance.

4. The nuclear fusion reactor according to claim 2, further comprising a mounting table on which the ion beam emitting substance is mounted,
wherein, when the metallic heating element is mounted on the mounting table, the ion beam emitting substance is located so as to be adjacent to the portion containing lithium as a solute.

5. The nuclear fusion reactor according to any one of claims 2 to 4, wherein the lithium primarily contains ⁶Li.

6. The nuclear fusion reactor according to any one of claims 1 to 5, further comprising a metal that is located adjacent to the metallic heating element, the metal containing a substance to be subjected to nuclear transmutation.

7. The nuclear fusion reactor according to any one of claims 1 to 6, further comprising a device for regulating an amount of heavy hydrogen contained as a solute in the metallic heating element.

8. The nuclear fusion reactor according to claim 7, wherein:
the metallic heating element is a metal whose equilibrium pressure of heavy hydrogen increases as a temperature increases; and
the device for regulating the amount of heavy hydrogen contained as a solute regulates the amount of heavy hydrogen contained as a solute so as to be smaller than an amount of heavy hydrogen that allows the metallic heating element to most actively cause nuclear fusion.

9. The nuclear fusion reactor according to claim 7, wherein:
the metallic heating element is a metal whose equilibrium pressure of heavy hydrogen decreases as a temperature increases; and
the device for regulating the amount of heavy hydrogen contained as a solute regulates the amount of heavy hydrogen contained as a solute so as to be greater than an amount of heavy hydrogen that allows the metallic heating element to most actively cause nuclear fusion.

10. The nuclear fusion reactor according to any one of claims 1 to 9, wherein the metallic heating element has a continuous vent hole formed inside the metallic heating element.

11. The nuclear fusion reactor according to any one of claims 1 to 10, wherein the heavy hydrogen gas contains a helium gas as a coolant for the metallic heating element.

12. The nuclear fusion reactor according to any one of claims 1 to 11, further comprising a device for removing helium from the heavy hydrogen gas.

13. A nuclear fusion reactor comprising a plurality of the nuclear fusion reactors according to claim 7 arranged in series along a flowing direction of a single cooling medium.

14. A thermal device using the nuclear fusion reactor according to any one of claims 1 to 13 as a heat source.

15. An external combustion engine using the nuclear fusion reactor according to any one of claims 1 to 13 as a heat source.

16. A power generating apparatus using the nuclear fusion reactor according to any one of claims 1 to 13 as a heat source.

17. A moving object using the external combustion engine according to claim 15 as a motive power source.

18. A moving object using the power generating apparatus according to claim 16 as an electric power source.
